(19) Europäisches Patentamt
European Patent Office
Office européen des brevets

(11) **EP 3 982 289 B1**

(12) **EUROPEAN PATENT SPECIFICATION**

(45) Date of publication and mention of the grant of the patent:
**20.11.2024 Bulletin 2024/47**

(21) Application number: **20756999.7**

(22) Date of filing: **05.06.2020**

(51) International Patent Classification (IPC):
*G06V 20/80* $^{(2022.01)}$   *G06V 30/41* $^{(2022.01)}$
*G06F 21/32* $^{(2013.01)}$   *G06F 21/16* $^{(2013.01)}$
*G06V 40/16* $^{(2022.01)}$

(52) Cooperative Patent Classification (CPC):
**G06F 21/16; G06F 21/32; G06V 20/80; G06V 30/41; G06V 40/169;** G06V 20/95

(86) International application number:
**PCT/PT2020/050023**

(87) International publication number:
**WO 2020/251380 (17.12.2020 Gazette 2020/51)**

(54) **METHOD FOR VALIDATION OF AUTHENTICITY OF AN IMAGE PRESENT IN AN OBJECT, OBJECT WITH INCREASED SECURITY LEVEL AND METHOD FOR PREPARATION THEREOF, COMPUTER EQUIPMENT, COMPUTER PROGRAM AND APPROPRIATE READING MEANS**

VERFAHREN ZUR VALIDIERUNG DER ECHTHEIT EINES IN EINEM OBJEKT VORHANDENEN BILDES, OBJEKT MIT ERHÖHTER SICHERHEITSSTUFE UND VERFAHREN ZUR HERSTELLUNG DAVON, COMPUTERAUSRÜSTUNG, COMPUTERPROGRAMM UND ENTSPRECHENDES LESEMITTEL

PROCÉDÉ DE VALIDATION DE L'AUTHENTICITÉ D'UNE IMAGE PRÉSENTE DANS UN OBJET, OBJET À NIVEAU DE SÉCURITÉ INTENSIFIÉ ET SON PROCÉDÉ DE PRÉPARATION, APPAREIL INFORMATIQUE, PROGRAMMES D'ORDINATEUR ET MOYEN DE LECTURE ADAPTÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2019 PT 2019115571**

(43) Date of publication of application:
**13.04.2022 Bulletin 2022/15**

(73) Proprietors:
• **Imprensa Nacional-Casa Da Moeda, SA 1000-042 Lisboa (PT)**
• **Universidade de Coimbra 3004-531 Coimbra (PT)**

(72) Inventors:
• **MENDONÇA DA SILVA GONÇALVES, Nuno Miguel 1600-296 LISBOA (PT)**
• **VALLE CRUZ, Leandro Moraes 1500-279 LISBOA (PT)**

• **MEDVEDEV OLEGOVICH, Iurii 3000-106 COIMBRA (PT)**

(74) Representative: **Monteiro Alves, Inês Alameda Dos Oceanos, № 41K-21 Parque das Nações 1990-207 Lisboa (PT)**

(56) References cited:
**US-A1- 2004 117 627     US-A1- 2004 117 627**

• **SCHROFF FLORIAN ET AL: "FaceNet: A unified embedding for face recognition and clustering", 2015 IEEE CONFERENCE ON COMPUTER VISION AND PATTERN RECOGNITION (CVPR), IEEE, 7 June 2015 (2015-06-07), pages 815 - 823, XP032793492, DOI: 10.1109/CVPR.2015.7298682**

- **YUPING FENG ET AL: "The application of scale invariant feature transform fused with shape model in the human face recognition", 2016 IEEE ADVANCED INFORMATION MANAGEMENT, COMMUNICATES, ELECTRONIC AND AUTOMATION CONTROL CONFERENCE (IMCEC), IEEE, 3 October 2016 (2016-10-03), pages 1716 - 1720, XP033070981, DOI: 10.1109/IMCEC.2016.7867511**

## Description

### Field of the Invention

The present invention refers to a computer implemented method for intensification of the security level against alteration and counterfeiting of an object to be validated and to provide the validation of the authenticity of an image present in an object, where the object is part of the technical field of graph security.

The present invention further comprises an original object with intensified security level against alteration and counterfeiting and the respective method of preparation.

The present invention further comprises computer devices for reading encoded information in an image comprising means adapted to execute the steps of the method, to computer programs with instructions for executing the methods of the invention and to reading means for a computer equipment with the respective computer programs installed.

### Prior Art

Graph security represents a relevant function in the guarantee of trust in society relations, between the State, the citizens and the organizations, that require authentic and reliable documents and values, such as validation and authentication seals, tags and labels for products, personal and corporate identification documents and diplomas and certificates.

The development of safe methods and products in view of the advance in the counterfeiting of high value products is a serious problem for the companies that produce them, since the forgers, acting in group or independently, hold increasingly sophisticated instruments and high quality equipment, which permit them to forge relatively easily the products or the seals of trust.

Thus, there exists a great interest in creating mechanisms for controlling the authenticity of documents related to the identification and to the authenticity of products and documents, apart from personal and corporate identification documents and graph objects with intensified security levels.

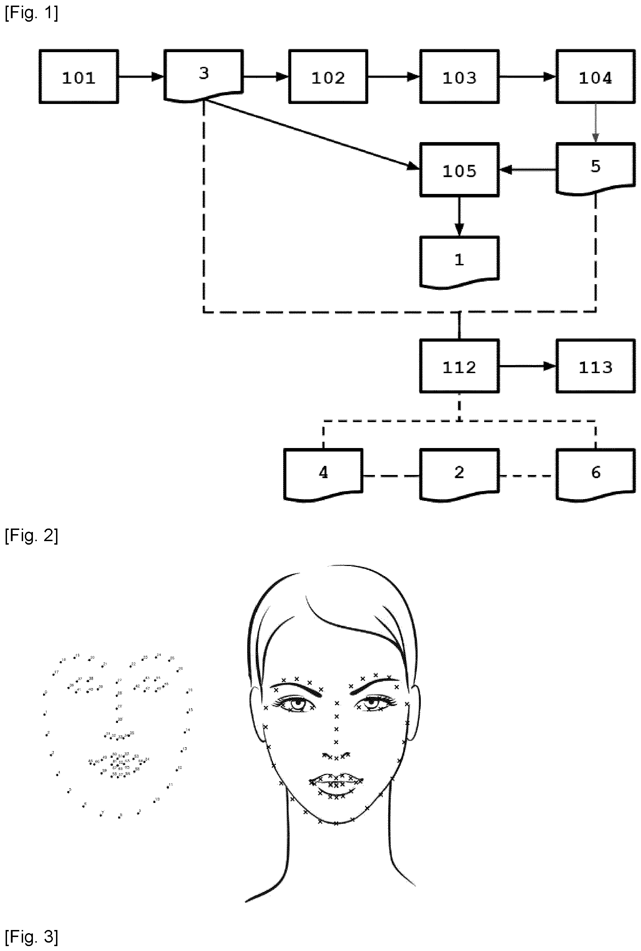

There are known methods for intensifying the security in graphic objects, such as the Cryptoglyph TM from AlpVision known from US20040013285 A1 (Jordan et al.) January 22, 2004, figure 1. This reference to the state of the art presents a solution that utilizes prints of extremely small size, not perceptible to the human eye, but verifiable using a smartphone camera. In this case its low production cost and the invisibility of the patterns (in a clear color, confusable with white) are the main advantages. On the other hand, the main disadvantages refer to the fact that the pattern is relatively easy to be read with sophisticated scanners and of being reproduced by means of higher resolution printers.

Another concept is known from the Bubble Tag technology by Prooftag, which creates a unique bubble pattern in a graph security object, where this pattern may be considered as being impossible to be reproduced, due to the fact that the process of creation thereof is not controllable. In this case, during the manufacturing process, this pattern is recorded and stored in a database, for posterior comparison with the image of the pattern created at the moment of checking. The use of a sole pattern per item adds high security in the checking of authenticity, however, it requires the management and maintenance of a complex and large database, making the system excessively costly. Additionally, due to the extremely small dimensions, it is exceedingly difficult to read this pattern using a conventional smartphone, whereby the reading process is fraught with a significant error rate.

Both the systems, Cryptoglyph and Bubble Tag, publicize the fact that they can both be verifiable using a smartphone, there existing, however, the need for calibration of the parameters of the cameras from the numerous devices available in the market, for the respective applications to obtain successful authenticity checks, apart from the fact that the cameras of the conventional smartphones do not suffice for the task, requiring magnifying lenses for the success rates to reach minimum quality rates. This substantially reduces the practical application and the security of these technologies.

Another complementary form of security is steganography, which consists in codifying an information, for example, a text, within other information, for example an image. Said approach permits developing applications such as: transmission of an information that is only known by those that know certain method parameters, capable of exhibiting messages from images, such as for example, 2D barcodes, that permit validating a certain image, for example, verifying that this contains a certain hidden code. One particular known steganography technique is LSB (Least Significant Bit), which modifies a less significant bit from pixels of an image to codify an information. This technology holds simple characteristics; however, it is a technique with relatively limited flexibility.

Another steganography technique is the Halftone Visual Cryptography. This method follows an approach that is distinct from the LSB one. Here, an image is encoded in several images with black and white pixels (halftone), which do not present characteristics of the original image visually perceived by a human being. One of the characteristics of the final image of the Halftone Visual Cryptography process is the total loss of the aesthetic value of the original image, which comes to resemble a white noise, that is, without any detectable or identifiable form by a human being, losing, for example, the aesthetic value of the image.

An approach is also known from the state of the art that utilizes 2D barcode patterns, such as the QR Code or the Data Matrix, where a matrix in black and white dots is printed, that codify an information that may be easily decoded using a smartphone. The main disadvantage of this approach resides in the fact that its aesthetic value is extremely reduced, apart from the fact that, since they are open codes, they can hardly produce by themselves encrypted or concealed information. To solve the disadvantage of the inferior aesthetics, there exist methods that produce models of QR Codes with more appealing elements, such as the Q Art Code and Halftone QR Codes. From the aesthetic point of view, these methods continue to require the introduction of mandatory control points in several points of the image, reducing and limiting in a large scale the creative process and further increasing the possibility of having information that does not attract attention.

It is vitally important to guarantee the authenticity of a visual identity in a graph security object. For this purpose, the combination of different elements using distinct printing techniques, contemplating the use of security holograms, for example, makes the cloning process of a visual identity more difficult and, consequently, the forging of an identity, for example, the production of a new representation unit, using the same techniques of the original one, but varying some elements, such as the serial number.

The security systems frequently go through the creation of detailed verifications, nearly always only detectable and passible of confirmation by skilled technicians, in laboratory environments or possessing checking instruments not available to the common citizen.

One example of a technology used for validation of the authenticity of a photograph of an identity documents is the IPI - Invisible Personal Information TM by Juratrade, known in US6104812 A (Koltai et al.) August 15, 2000. This product adds information to a photo of a person in an identity document. This personal information can only be read and validated through a special lens that verifies the existence of this personal information overlaid on the image. Typically, this information is the identity number or passport number. The main disadvantage of this technology is related to the difficulty of validation of the authenticity of a document through the validation of the photo thereof, since a specific and costly device must be used, with reduced accessibility, thereby limiting its usability, universality and portability.

In fact, as can be seen from the previous example, the devices for validation of products and objects can be very costly and, further, not very portable and universal, many times ignoring the fact that many users, common citizens and consumers, hold practically ubiquitous devices and that have high capacity for validation of their documents and products.

In this manner, it is necessary to develop an object with an intensified security level against alteration and counterfeiting, which may be applied in a versatile manner to several products and documents in the scope of the graph security. It is also necessary to develop a method of verification of the authenticity of graphic objects that has a high trust level and that is a robust solution for the detection of false negatives. Additionally, it is desired that the method be carried out by conventional computer equipment, by smartphones or any other electronic or electric equipment.

**Brief Description of the Drawings**

With the purpose of providing an understanding of the principles according to the embodiments of the present invention, reference will be made to the embodiments illustrated in the figures and to the language used to describe them. In any case, it must be understood that there is no intention of limiting the scope of the present invention to the contents of the figures. Any subsequent alterations or modifications of the inventive characteristics here illustrated and any additional applications of the principles and embodiments of the invention shown, which would occur naturally to a person skilled in the art holding this description, are considered within the scope of the claimed invention.

**Fig.1**
[Fig.1] shows an embodiment of the preparation of an original object and of the validation of authenticity of an object to be validated;

**Fig.2**
[Fig.2] shows a representation of descriptors of the image of the face of a person;

**Fig.3**

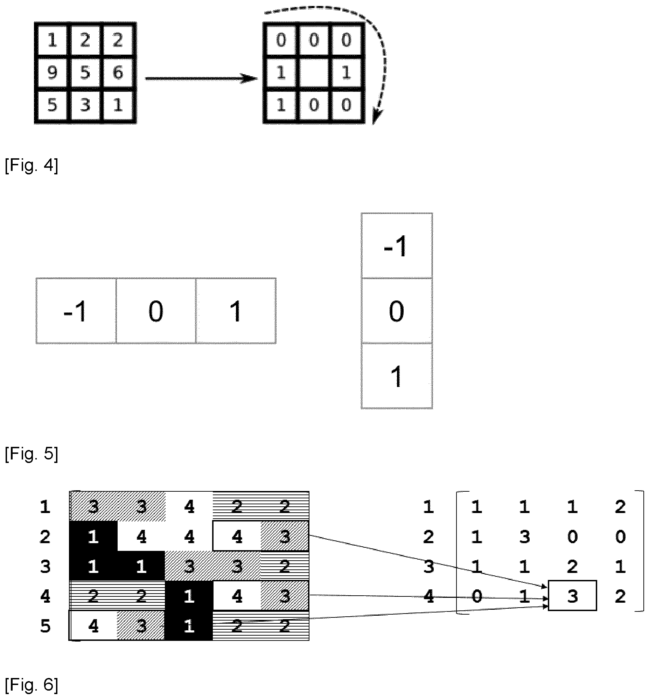

[Fig.3] shows a schematic representation of the application of the technology of the local binary pattern histograms (LBP) for the definition of the descriptors based on the characteristics of the texture;

**Fig.4**
[Fig.4] shows a selection of kernels used in the histogram HoG technique;

**Fig.5**

[Fig.5] shows the creation of a gray level co-occurrence matrix (GLCM);

**Fig.6**

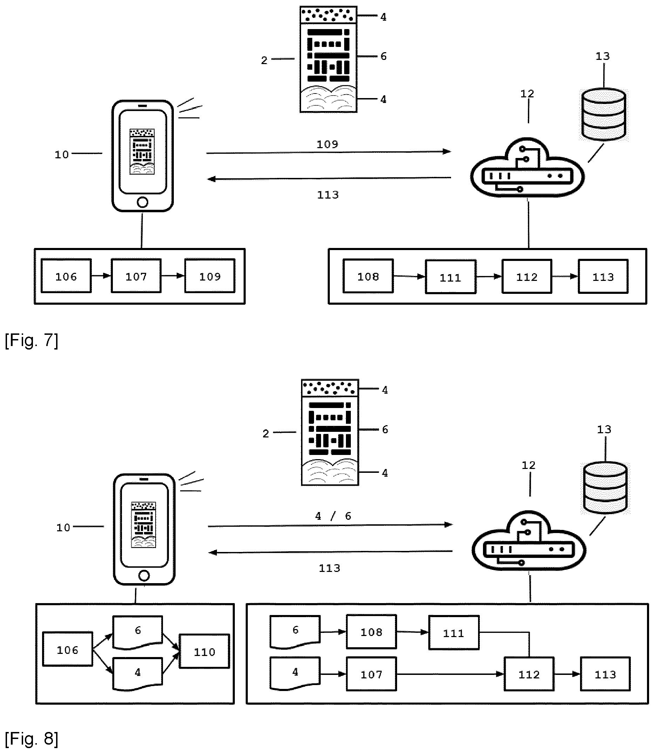

[Fig.6] shows an embodiment of the method of verification of the authenticity of an object to be validated using a server and a database;

**Fig.7**

[Fig.7] shows another embodiment of the method of verification of the authenticity of an object to be validated using a server and a database;

**Fig.8**

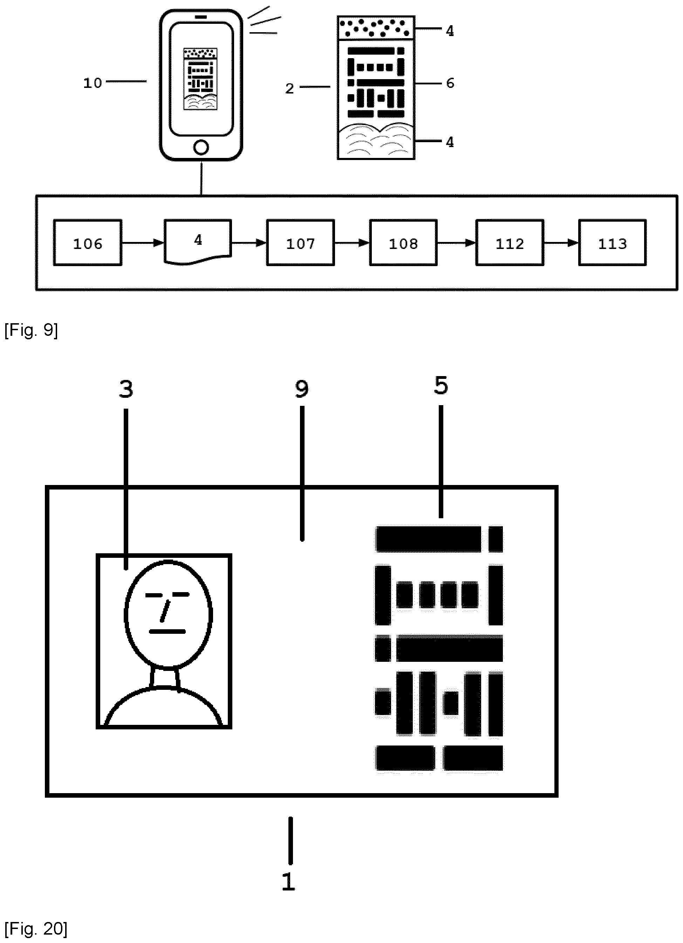

[Fig.8] shows an embodiment of the method of verification of the authenticity of an object to be validated carried out entirely in a computer equipment;

**Fig.9**

[Fig.9] shows an embodiment of an original object comprising an original image, from which encoded information was extracted which is stored in a digital marker;

Fig.10

[Fig.10] shows another embodiment of an original object comprising two original images, from which encoded information is extracted which is stored in a digital marker;

**Detailed Description of the Invention**

The present invention is set out in the appended set of claims.

The present invention, in a first aspect, refers to a computer implemented method for intensifying the security level against alteration and counterfeiting of an object and to provide validation of the authenticity of an image present in an object characterized by comprising the following steps:

a) Processing of at least one original image (3), wherein at least one original image (3) is a photograph of the face of a person;

b) Association of at least one information to be encoded present in the original image (3) to one or more patterns of graphic elements for representation of data in a machine-readable visual element;

c) Generation of at least one digital marker with encoded information of the original image (5) where the digital marker (5) comprises at least one pattern of graphic elements for representation of data obtained from step b), wherein said machine-readable visual element for data representation is said digital marker with encoded information of the original image (5), which is a bidimensional matrix digital marker; wherein the encoded information of the original image comprises descriptors of the original image (7);

d) Validation of the authenticity of at least one image to be validated (4) and of at least one digital marker to be validated (6) materialized in an object to be validated (2), by means of the comparison of the encoded information calculated from at least one image to be validated (4) with the encoded information corresponding to at least one original image (3) and by means of the processing of the encoded information present in at least one digital marker to be validated (6) and optionally the processing of the encoded information present in at least one digital marker with encoded information of the original image (5), wherein said image to be validated (4) consists in a photograph of an image;

e) Decision as to the authenticity of at least one image to be validated (4) and of at least one digital marker to be validated (6) materialized in an object to be validated (2);

wherein the step d) of validation of authenticity of at least one image to be validated (4) and of at least one digital marker to be validated (6), materialized in an object to be validated (2) comprises the comparison of one or more of geometric characteristics and/or one or more texture characteristics and/or one or more three-dimensional depth characteristics and/or one or more particle density random dispersion characteristics in the image to be validated (4) with the respective characteristics in the original image (3), where the referred characteristics of the image to be validated (4) and of the original image (3) are defined, respectively, by means of one or more descriptors of the image to be validated (8) and by means of one or more of the descriptors of the original image (7);

wherein the step d) of validation of authenticity of at least one image to be validated (4) and at least one digital marker to be validated (6), materialized in an object to be validated (2), comprises the use of an analysis by means of the relation of the distances between the descriptors of the image to be validated (8) and the descriptors of the original image (7), comprising weighing factors associated to one or more of the referred distance relations; wherein the step e) of decision on the authenticity of at least one image to be validated (4) and of at least one digital marker to be validated (6) materialized in an object to be validated (2) comprises taking into account whether an absolute and a normalized difference between vectors of the descriptors of the original image (7) and vectors of the descriptors of the image to be validated (8) fit into a pre-determined acceptable range; wherein the information to be encoded present in the original image (3) comprises one or more descriptors of the original image (7) associated to the geometric characteristics of one or more elements of the face selected from the group consisting of the contour of the face, the mouth, the nose, the eyes, the eyebrows, the cheeks and the chin.

Figure 1 shows an embodiment of the present invention, comprising the materialization of an original object (105) with intensified security level based on the preparation of an original image (101), on the codification of an original image (102), on the association of encoded information from an original image to an original digital marker (103) and on the creation of an original digital marker (104). In another aspect of the present invention the method comprises a step of validation of an image to be validated and a digital marker to be validated in an object to be validated (112) and a decision as to the authenticity of the object to be validated (113).

The present invention, in a second aspect, refers to a method for preparing an original object with intensified security level against alteration and counterfeiting comprising the following steps:

a) Processing of at least one original image (3), wherein at least one original image (3) is a photograph of the face of a person; b) Association of at least one information to be encoded present in the original image (3) to one or more graphic element patterns for data representation in a machine-readable visual element; c) Generation of at least one digital marker with encoded information of the original image (5) where the digital marker (5) comprises at least one graphic element pattern for data representation obtained from step b), wherein said machine-readable visual element for data representation is said digital marker with encoded information of the original image (5), which is a bidimensional matrix digital marker; and wherein the encoded information of the original image comprises descriptors of the original image (7); wherein the information to be encoded present in the original image (3) comprises one or more descriptors of the original image (7) associated to the geometric characteristics of one or more elements of the face selected from the group consisting of the contour of the face, the mouth, the nose, the eyes, the eyebrows, the cheeks and the chin; wherein the distances between the descriptors of the original image (7) are used for validation of authenticity of said original object (1), wherein said distances between the descriptors of the original image (7) comprise weighing factors associated to one or more of the referred distance relations; d) Materialization of at least one original image (3) and of at least one digital marker with encoded information of the original image (5) in a physical support (9) generating an original object (1).

In a third aspect, the present invention refers to an original object with intensified security level against alteration and counterfeiting, the object comprising at least one original image (3) and at least one digital marker with encoded information of the original image (5) materialized in a physical support (9) to be prepared by means of the method defined in any one of claims 13 to 16; wherein said digital marker with encoded information of the original image (5) is a bidimensional matrix digital marker and the encoded information of the original image comprises descriptors of the original image (7); wherein at least one original image (3) is a photograph of the face of a person; wherein the information to be encoded present in the original image (3) comprises one or more descriptors of the original image (7) associated to the geometric characteristics of one or more elements of the face selected from the group consisting of the contour of the face, the mouth, the nose, the eyes, the eyebrows, the cheeks and the chin.

In a fourth aspect, the present invention refers to a computer equipment (10) comprising means adapted to execute the steps of the method implemented by computer for validation of an object to be validated;

In a fifth aspect, the present invention refers to a computer equipment (10) comprising means adapted to execute the steps of the method implemented by computer for the preparation of the original object.

In a sixth aspect, the present invention refers to a computer program comprising instructions to enable the computer equipment reader of encoded information in an image, according to the present invention, to execute the steps of the method implemented by computer for validation of an object to be validated.

In a seventh aspect, the present invention refers to a computer program comprising instructions to enable the computer equipment reader of encoded information in an image, according to the present invention, to execute the steps of the method implemented by computer for the preparation of an original object.

In an eighth and ninth aspect, the present invention refers to the computer-readable data carrier having stored thereon the referred computer programs according to the present invention.

The computer implemented method for intensifying the security level against alteration and counterfeiting of an object and to enable the validation of the authenticity of an image present in an object and the object of the present invention solve the problems of the state of the art related to the need to create mechanisms and instruments for controlling the authenticity of products in the technical field of graph security.

In a surprising manner, the robustness and security level provided by the method and the object of the present invention are increased when the same object is used in an original image and a digital marker with encoded information of the original image, which serve as parameters for comparison and control for verifying the authenticity of an object comprising an image to be validated and a digital marker to be validated, where at least one optical reader is used (11) present in a computer equipment (10), where the optical reader (11) is preferably a photographic camera for image capture. In a surprising manner, the method of the present invention may be implemented by means of a conventional computer equipment (10), for example a smartphone.

In one of the preferred embodiments, the present invention refers to a computer implemented method for intensifying the security level against alteration and counterfeiting of an object and to provide the validation of authenticity of an image present in an object where the step of validation of authenticity of at least one image to be validated (4) and of at least one digital marker to be validated (6), materialized in an object to be validated (2) comprise the comparison of one or more geometric characteristics and/or one or more texture characteristics and/or one or more three-dimensional depth characteristics and/or one or more of the characteristics of random dispersion particle density in the image to be validated (4) with the respective characteristics in the original image (3), where the referred characteristics of the image to be validated (4) and of the original image (3) are defined, respectively, by means of one or more descriptors of the image to be validated (8) and by means of one or more descriptors of the original image (7).

Some embodiments of the present invention will now be detailed referring to the validation step, where the analysis of the geometric characteristics is also comprised.

In the embodiments of the method according to the present invention, concretely in the step referring to the association of at least one information to be encoded present in the original image (3) to one or more of the patterns of graphic elements for data representation in a machine-readable visual element, techniques known to a person skilled in the art may be used. One particularly preferred technique is that known from patent application No. INPI 20171000063377 (Method and computer system for image generation with encoded information, images obtained therefrom and its method and reading system), of the National Printing House and Mint and Coimbra University of September 26, 2017.

The geometric characteristics are defined by means of one or more descriptors of the image to be validated (8) and by means of one or more descriptors of the original image (7), where the referred descriptors can be attributed to elements of the original image (3) representative in terms of contour and of fundamental elements that constitute the figure represented in the original image (3). The image to be validated consists in a photograph of an image, which can be submitted to a method of verification of authenticity according to the present invention.

The descriptors of the original image (7) are associated to distinct and unique characteristics of the original image (3) and can also be associated to a significant level of distinction as regards the similar images.

The original image (3) is the photograph of the face of a person or a random pattern, printed, of glitter particles mixed with ink. The descriptors of the original image (7) may be related to characteristics of the geometric positions of the particles in connection with a reference point in the image, such as, the geometric coordinates in relation to the mass center, the geometric coordinates in relation to a specific reference point, or the density of the particles in numbered parts of the distribution of points, or other topological characteristics of the particle distribution. In the image to be validated (4) the descriptors of the image to be validated (8) are calculated, corresponding to those selected as descriptors of the original image (7) as well as the particle density in numbered parts of the image of the distribution of points, or other topological characteristics of the particle distribution image.

In another embodiment of the present invention, the original image (3) is a hologram pattern which reflector image has one or several graphic motives that reflect with variable intensities, colors and energy depending on the orientation of the pattern, in relation to the capture camera and depending on one or more points of origin of light. In the image to be validated (4) the reflected color patterns and the information on luminance, chrominance, and spectral light components, as well as the geometric coordinates of the graphic patterns of the hologram matrix are analyzed.

As illustrated in figure 2, there are presented 68 examples of special characteristics attributed to the face of a person, to which descriptors may be attributed. These characteristics are the basis for the calculation of the descriptors and the extraction of encoded information of the face of a person, which are used in the method of verification of authenticity of the photographs of people, according to the method of the present invention.

Figure 9 illustrates an embodiment of an original object according to the present invention, related to an identity document, comprising the photograph of a person and a digital marker.

Figure 10 illustrates an embodiment of an original object according to the present invention, related to an authenticity guarantee seal for a product, comprising at least one original image and one digital marker, where the original image presents a random pattern, printed, of glitter particles mixed with ink. As illustrated in figure 10, the original object according to the present invention can comprise more than one original image, for example a hologram.

OpenCV is an example of application open to the public which has a significant set of tools for detecting faces and special characteristics in images.

In one embodiment of the present invention, the step of validation of authenticity comprises a step of rectification of the image to be validated (4) as regards the original image (3) and optionally a step of rectification of the digital marker to be validated (6) in relation to the digital marker with encoded information of the original image (5). The image rectification techniques used in the present invention are the usual ones of the state of the art and consist in applying a series of transformations to two or more images, so that the corresponding points are in the same y-coordinate in all of them. This technique is frequently used in computer vision particularly for optimizing the process of finding corresponding points between different images.

In the embodiments of the present invention where the original image (3) is the photograph of the face of a person, the coordinates of the descriptors of the original image (7) and the coordinates of the descriptors of the image to be validated (8) may correspond to anchor points in the rectification step, which will allow the adequate comparison between the original rectified image (3) and the rectified image to be validated (4).

Additionally, to effect an adequate comparison between the original rectified image (3) and the image to be validated (4) the alignment of the respective vectors related to the coordinates of the descriptors of the original image (7) and the coordinates of the descriptors of the image to be validated (8) is made. Another applicable measure comprises the due framing of the images being compared in a same scale. In this manner, it is possible to obtain a vector corresponding to the absolute and normalized difference between the vectors of the descriptors of the original image (7) and the vectors of the descriptors of the image to be validated (8). The decision making step as to the authenticity takes into account whether the absolute and normalized difference between the vectors of the descriptors of the original image (7) and the vectors of the descriptors of the image to be validated (8) fit into a pre-determined acceptable range.

Therefore, the validation of authenticity of at least one image to be validated (4) and of at least one digital marker to be validated (6) materialized in an object to be validated (2), is a main objective of the present invention as regards the encoded information extracted from at least one original image (3) and the encoded information present in at least one digital marker with encoded information of the original image (5).

In one of the preferred embodiments according to the present invention, in the step of validation of authenticity of at least one image to be validated (4) and of at least one digital marker to be validated (6), materialized in an object to be validated (2), the analysis of a receiver operating characteristic curve (ROC curve) is used. In a ROC curve, the rate of positive correspondence between the original image (3) and the image to be validated (4), referring to the sensitivity, is plotted depending on the rate of false-positive correspondences between the original image (3) and the image to be validated (4), where this last rate is related to the specificity of threshold contour points. Each point of the ROC curve is related to a pair of specificity/sensitivity corresponding to a specific decision.

The sensitivity is the ratio between the number of positive correspondences and the sum of positive and false-negative correspondences. The specificity is the ratio between the number of negative correspondences and the sum of false-positive correspondences and of negative correspondences.

A test with a perfect discrimination in the scope of the analysis of a ROC curve, that is, that does not lead to any overlaying in the two point distributions, generates a ROC curve that passes by the point corresponding to 100% of selectivity and 100% of specificity. In the ROC analysis technique, the area under the curve represents a measure of how one parameter can adequately distinguish two diagnosis groups.

In another embodiment according to the present invention, in the step of validation of the authenticity of at least one image to be validated (4) and of at least one digital marker to be validated (6), materialized in an object to be validated (2) an analysis by means of the comparison between the coordinates of the descriptors of the image to be validated (8) and the coordinates of the descriptors of the original image (7) is used, optionally comprising weighing factors associated to one or more of the respective descriptors. Alternatively, in the referred comparison calculated functions may be used, for example, from the coordinates, from the texture characteristics or from the elements of the descriptors. Preferably, an analysis by means of the comparison between the coordinates of the descriptors of the image to be validated (8) and the coordinates of the descriptors of the original image (7) may be carried out with the use of a ROC curve.

Alternatively, the step of validation of the authenticity of at least one image to be validated (4) and of at least one digital marker to be validated (6), materialized in an object to be validated (2) an analysis is made by means of one or more distance relations between the descriptors of the image to be validated (8) and the descriptors of the original image (7), optionally comprising weighing factors associated to one or more of the referred distance relations. This alternative embodiment is particularly advantageous since, in the authentication of an image to be validated (4) as regards the original image (3), it was observed that the differences between the distance vectors between the descriptors of the original image (7) and the descriptors of the image to be validated (8) are similar for different regions of the image from which the different descriptors were selected. On the other hand, it was observed that, in the cases where there was no validation of the authenticity of the image to be validated (4) as regards an original image (3), the differences between the distance vectors vary substantially according to the different regions of the image from where the different descriptors were selected.

The selection of the distance relations between the contour points of the image must take into account the instability of the relation within a determined sample set, where the instability contemplates the specific level of differentiating capacity of a given relation of distances between contour lines.

Alternatively, the step of validation of authenticity of at least one image to be validated (5) and of at least one digital marker to be validated (6) printed on an object to be validated, can be carried out by an analysis by means of neural networks, which can be configured by means of the following steps:

i. Selection of a first sample set with a number of coordinates of the descriptors of the original image (7) for training of the neural network;

ii. Selection of a second sample set with a number of coordinates of the descriptors of the image to be validated (8) for training of the neural network;

iii. Establishing the normalized differences between the coordinates of the descriptors of the original image (7) and the coordinates of the descriptors of the image to be validated (8);

iv. Establishing intervals of acceptance values for positive verification results between the original image (3) and the image to be validated (4).

For the development of the neural networks applications that are open to the public may be used for the data flow, that enable the differentiated programming throughout the set of tasks, such as for example OpenCV, Tensorflow and Caffe. The neural networks can be developed with the incorporation of some layers for receival and processing of data. In an illustrative manner, one layer may be related to the processing of the normalized differences between the coordinates of the descriptors of the original image (7) and of the descriptors of the image to be validated (8). Additionally, another layer may be related to the execution of a binary test for verifying the true and false results in terms of compatibility between the coordinates. As can be appreciated by a person skilled in the art, the learning tests for the neural network can be carried out with real training data or generated data, where the generated data can comprise the intentional addition of defects, manipulations or distortions in the images.

Some embodiments of the present invention will now be detailed where in the step of validation the analysis of the texture characteristics is comprised.

In one embodiment of the present invention, the computer implemented method for intensifying the security level against alteration and counterfeiting of an object and to provide the validation of authenticity of at least one image to be validated (4) and of at least one digital marker to be validated (6), materialized in an object to be validated (2), comprises the analysis of the texture characteristics in the original image (3) by means of one or more of the techniques of the local binary pattern histogram (LBP), the histogram of oriented gradients (HoG) and the gray level co-occurrence matrix (GLCM). Preferably, these techniques use descriptors corresponding to the differences between the referred techniques applied to one or more descriptors of the original image (7) and to one or more descriptors of the image to be validated (8).

The local binary pattern histogram (LBP) technique is known from "Face Description with Local Binary Patterns: Application to Face Recognition" (Timo Ahonen; Abdenour Hadid; Matti Pietikäinen), IEEE, Pattern Analysis and Machine Intelligence, December 2006, vol. 28 (12), 2037-2041, for use in processing of images including detection or identification of objects in an image. This technique is based on the attribution of decimal numbers for each pixel of an image and establishes a binary pattern for each pixel, considering its decimal number and the decimal numbers of eight neighbor pixels. Therefore, as illustrated in Figure 3, the LBP technique establishes a correspondence between decimal numbers based on texture characteristics and binary values for a set of pixels. Thus, this correspondence between the decimal values and the respective binary values of a set of pixels can be recovered from an original image and compared with the corresponding values for an image to be validated. In case the images in question present different dimensions, the model requires normalization of the data to obtain a coherent texture descriptor.

The history of oriented gradients technique (HoG) is known from "Histograms of Oriented Gradients for Human Detection" (Navneet Dalal e Bill Triggs), IEEE Computer Society Conference on Computer Vision and Pattern Recognition, vol. 1, pages 886-893, 25-26 June 2005, and in "Finding People in Images and Videos" PhD Thesis (Navneet Dalal), L'institut National Polytechnique De Grenoble, July 17, 2006, for use in processing of images including detection and/or classification of objects. This technique is based on the sum of the occurrence of orientation of gradients in determined positions of the image. The method comprises the selection of parts of an image and the processing thereof and eventual re-dimensioning so as to obtain the descriptors or that part of the image that has useful information, eliminating useless information, such as the color contained in the background of an image. To calculate a HoG descriptor it is necessary to calculate the horizontal and vertical gradients and subsequently calculate the histogram of gradients, where this task is carried out by means of the application of filters to the image with the kernels represented in Figure 4. As an alternative to the application of filters, it is possible to attain the same results with a Sobel operator, for example in an OpenCV application, using a size 1 kernel.

When calculating the histograms, a division of the image is made in a determined number of cells, so that the noise is reduced, and the relevant characteristics of the image are not lost.

In the preferred embodiments of the present invention the use of descriptors based on texture characteristics is based on a micro analysis mode of the image, for example attributing descriptors to specific portions of the image. When the image refers to a photograph of a person, as illustrated in figure 2, the descriptors are attributed to regions of the face, preserving the intrinsic information of the sub-regions, such as the contour of the face, the mouth, the nose, the eyes, the eyebrows, the cheek and the chin. Alternatively, or in a complementary manner, a macro analysis of the image may also be used, where the descriptors are applied to the image as a whole, dividing the image in sub-regions by means of adequate contour points. In the embodiments where the image refers to the photograph of a person, as an example, the sub-regions of the face can be delimited by the eyes, nose, left cheek and right cheek and moustache region.

Both in the micro analysis as in the macro analysis, the local binary pattern histogram (LBP) techniques and the histogram of oriented gradients (HoC) are applicable. In this manner, applying one or more of the referred techniques to an image to be validated (4) and to an original image (3), the respective descriptors and the respective histograms are obtained, it is possible to calculate the difference between the histograms referring to the images being compared, obtaining a distance between the histograms, applicable for deciding whether the image to be validated (4) is authentic as regards the original image (3).

The difference between the histograms of the two images can be preferably calculated by means of the neural networks. Alternatively, as an example, the difference can also be calculated by means of the distance between histograms by the chi-square technique (equation 1), when the LBP and HoG are applied, where 1 refers to one of the images and 2 refers to the other image in comparison and "I" refers to the respective image.

[Math. 1]

$$d(H_1, H_2) = \sum_I \frac{(H_1(I) - H_2(I))^2}{H_1(I)}$$

The difference between the histograms of the two images being compared can also be calculated by means of the distance between histograms by the Bhattacharyya technique (equation 2), when the HoG technique is applied, where N is the total number of intervals of the histogram.

[Math. 2]

$$d(H_1, H_2) = \sqrt{1 - \frac{1}{\sqrt{H_1 H_2 N}} \sum_I \sqrt{H_1(I) \cdot H_2(I)}}$$

In one embodiment of the present invention, the analysis of the characteristics of the texture in the original image (3) is executed by means of the gray level co-occurrence matrix (GLCM), which is a model of texture based on the information of the gray scale of pixels. The conventional GLCM technique is known from "Textural features for image classification" (R.M. Haralick, K. Shanmugam, I. Dinstein), IEEE Trans. Syst. Man Cybern. 3 (6) (1973) 610-621. This technique aims to identify the spatial dependence in terms of tones of gray, by means of the extraction of the texture information referring to the transition of the levels of gray between two pixels. As illustrated in Figure 5, the technique computes the separate pairs of pixels in a determined zone having transition of levels of gray, resulting in the distribution of the gray tones.

Prior to using the gray level co-occurrence matrix technique (GLCM), it may be necessary to consider the behavior of the image when submitted to successive re-dimensioning maintaining the original proportions of the image to create versions of the image with distinguishing sizes, applying a model of gray levels.

Preferably, the re-dimensioning maintaining the original proportions of a determined image in gray levels is carried out by means of the re-dimensioning in a pre-determined scale, leading to a pyramidal decomposition of the image. In this manner, it is possible to calculate the histograms by means of the extraction of information on the texture, observing a similarity between the results of the texture histograms for images re-dimensioned successively. Therefore, this technique can also be used in the preferred embodiments of the step of validation of an image to be validated, by means of the evaluation of the differences between the histograms related to descriptors of texture referring the each pair of images being compared as the successive re-dimensioning are carried out in the direction of reducing the size of the images.

As is illustrated in figure 7, the model of gray levels can also comprise an analysis of histograms of textures for the pairs involving the original image (3) and the image to be validated (4) when these are re-dimensioned to a determined reduced size and are subsequently gradually re-dimensioned to their original size. In this process there is a loss of the resolution of the images that are re-dimensioned to a larger size and it is also expected to obtain a similarity to the histograms of the descriptors for each one of the images as the re-dimensioning in the direction of increase in size to the original size is executed. This similar variation between the histograms for each pair of images can also be used in the step of validation of the image to be validated (4).

In this manner, the model of the gray scale and the gray level co-occurrence matrix (GLCM) consist in preferred embodiments of the present invention in the step of validation of the authenticity of at least one image to be validated (4) and of at least one digital marker to be validated (6) in relation to an original image (3) and to a digital marker with encoded information of the original image (5).

In this preferred embodiment, the image to be validated (4) and the original image (3) are carried, being respectively detected the descriptors of the image to be validated (8) and the descriptors of the original image (7). Next, the image to be validated (4) is re-dimensioned and rectified, the descriptors of the image to be validated (8) being recalculated. Next, the minimum values and the maximum values of the descriptors of the image to be validated (8) are selected, so as to create a rectangular region that includes the image to be validated (4), which is selected and cut out. The next step comprises the equalization of the original image (3) and of the image to be validated (4) and the successive re-dimensioning to the original image (3) and of the image to be validated (4), with the use, for example, of the GLCM, HoG or BLP techniques for each one of the re-dimensioned images, obtaining the vectors of the characteristics for each one of the images in each one of the different stages. Finally, the differences between the histograms of the two images are calculated for each one of the re-dimensioning steps so as to execute the validation.

In one of the embodiments of the present invention, the data of the original images are stored in a database (13) and/or in tuples.

In the preferred embodiments of the present invention, the machine-readable visual element for data representation is a digital marker of bidimensional matrix. In the preferred embodiments of the present invention, the digital marker is a digital marker of bidimensional matrix, selected from the group consisting of an Augmented Reality (AR) code, an Aztec code, a 16K code, a CRONTO code, a Dotcode, a Data Matrix, a JAB-Code, a MaxiCode, a PDF417, a PEQRC and a QR Code.

In the more preferred embodiments, the digital marker is a UniQode. The UniQode is based on a digital marker created by means of the appropriate organization of cells, which are comprised of a specific format of pixel arrangement, typically in a 3x3 format. Some cell patterns are related to graphic symbols used for encoding, where the association between a model and a symbol is called a library. In one cell, the pixels are simultaneously used to attribute aesthetic characteristics and encoding ones. The generation of a UniQode is based on a quantic system, that is, a regular division of the gray scale in 10 classes. For a determined image, each set of cells is typically arranged in a 3x3 pixel format, being encoded in a pattern in which the quantum relates to the colors of the respective pixel in the base image. Preferably the quanta Q3, Q4, Q5 and Q6 are used to adequately associate the graphic symbols to models by means of the library. In general, each pixel in a scale of grays is transformed into a set of pixels k x k in a black and white pattern.

The UniQode digital markers can be differentiated in "Graphic Code: a New Machine Readable Approach" (Cruz L., Patrão B. and Gongalves, N.), published in IEEE International Conference on Artificial Intelligence and Virtual Reality (AIVR), December 10 to 12, 2018. The UniQode digital markers can also be referenced in "Halftone Pattern: A New Steganographic Approach" (Cruz L., Patrão B. and Gongalves, N.), published in Eurographics 2018, EG 2018 - Short Papers.

In the steps of association of at least one information to be encoded present in an image to one or more graphic pattern elements for data representation in a machine-readable visual element, the encoding process begins by the identification of the cells arranged in a format of pixels and/or icons, typically 3x3, generating candidate cells. Next, one cell is selected per character of a message to be encoded and the referred character is replaced by the related pattern in a library. The remaining cells, both the non-selected candidate cells, as the non-candidate cells, are replaced by graphic elements, which are not listed in a library.

In alternative embodiments, the UniQode digital marker can comprise irregular graphic elements, in the form of icons, where the icons can be selected from an icon alphabet.

In the step of encoding the encoded information in a digital marker, an inverse process is carried out, where the search for patterns present in the library is carried out and whenever a pattern is located, the respective character is linked in the message to be encoded.

UniQode has a storage capacity for numerical and/or alphanumerical characters, varying according to its dimension.

UniQode can also comprise one or more encoded information referring to the traceability of the preparation of the original object (1), one or more encoded information used in the authenticity validation of at least one image to be validated (4) and one or more encoded information on the characteristics of the original object (1).

In the preferred embodiments of the present invention, in the step of validation of the authenticity of at least one image to be validated (4) and of at least one digital marker to be validated (6), materialized in an object to be validated (2), at least one optical reader (11) is used, preferably a photographic camera.

In the particularly preferred embodiments of the present invention, illustrated in Figure 6, the step of validation of authenticity of at least one image to be validated (4) and of at least one digital marker to be validated (6), materialized in an object to be validated (2), comprises the following steps:

i. Capture of at least one image to be validated (106) with an optical reader (11) present in a computer equipment (10);

ii. Calculation of the descriptors of at least one image to be validated (107) executed by the computer equipment (10);

iii. Executing a reading with the optical reader (11) of at least one encoded information in at least one digital marker to be validated (6), where the referred reading promotes the orientation by the descriptors of the digital marker to validate to a server (109) and promotes the transmission of the descriptors of the image to be validated (8) calculated in the previous step for the server (12);

iv. Search in at least one database for the descriptors of the original image (111) where the database with encoded information of the original image (13) is accessed by means of the server (12);

v. Validation of an image to be validated in an object to be validated (112) by the comparison in the server (12) of the descriptors of the image to be validated (8) with the descriptors of the original image (7);

vi. Decision as to the authenticity of an object to be validated (113) in the server (112);

vii. Transmission of the decision on the authenticity by server (12) to the computer equipment (10).

In this preferred embodiment, the server consists in an application, one part of a computer system or a complete computer, that provides services to a network comprising one or more computer equipment, including the computer equipment (10). This network of computer equipment is capable of exchanging information and sharing resources, is interlinked by a communications system where the connections can be established by means of cable media or wireless media.

In this preferred embodiment, a computer equipment (10), which may be a smartphone, comprising optical reader (11), that may be a camera of the smartphone, captures the image of an object to be validated (106) and the computer equipment (10) calculates the descriptors of at least one image to be validated (107). Next, the optical reader (11) captures the image of a digital marker to be validated and executes the reading of a link that promotes the orientation to a server (109). The values calculated referring to the descriptors of the image to be validated (8) are sent to the encoded link in the digital marker to be validated (6). In the server (12) the steps of decoding the descriptors of the digital marker to be validated (108) are executed; of search in at least one database for the descriptors of the original image (111); and of validation of an image to be validated in an object to be validated (112), where the descriptors calculated for the image to be validated (4) are compared with the descriptors of the original image (3), which are stored in at least one database (13) comprising encoded information of the original image (3) and of the digital marker with encoded information of the original image (5).

In another embodiment of the present invention, as illustrated in figure 7, the step of validation of the authenticity of at least one image to be validated (4) and of at least one digital marker to be validated (6), materialized in an object to be validated (2), comprises the following steps:

i. Capture of at least one image to be validated (106) and of the image of a marker to be validated with an optical reader (11) present in a computer equipment (10);

ii. Transmission of at least one image to be validated and at least one digital marker to be validated to a server (110);

iii. Reception of at least one image to be validated (4) and of at least one digital marker to be validated (6) by a server (12);

iv. Calculation of the descriptors of at least one image to be validated (107) executed by the server (12);

v. Decoding of the descriptors of the digital marker to be validated (108) executed by the server (12);

vi. Search in at least one database for the descriptors of the original image (111) where the database with encoded information of the original image (13) is accessed by means of the server (12);

vii. Validation of an image to be validated in an object to be validated (112) by means of the comparison in the server (12) of the descriptors of the image to be validated (8) with the descriptors of the original image (7);

viii. Decision on the authenticity of an object to be validated (113) in the server (12);

ix. Transmission of the decision on the authenticity by server (12) to the computer equipment (10).

In this preferred embodiment, a computer equipment (10), which may be a smartphone, comprising optical reader (11), which may be a camera of the smartphone, captures the image of an object to be validated (106) and also captures the image of a digital marker to be validated. Next, the computer equipment (10) sends the image to be validated (4) and the digital marker to be validated (6) to the server (12). After receiving the files with at least the image to be validated (4) and at least one digital marker to be validated (6), the server (12) calculates the descriptors of at least one image to be validated (107). The server (12) additionally executes the decoding of the descriptors of the digital marker to be validated (108). In the server (12) the step of validation of an image to be validated is additionally executed in an object to be validated (112), where the descriptors calculated for the image to be validated (4) are compared with the descriptors of the original image (3), which are stored in at least one database (13) comprising encoded information of the original image (3) and of the digital marker with encoded information of the original image (3) and the digital marker with encoded information of the original image (5). In this manner, the server also carries out the search in at least one database for the descriptors of the original image (111).

As regards the step of searching in at least one database for the descriptors of the original image (111), the information search system to be searched in a database requires at least one metric of comparison between the information to be searched in the database and the tuples of the database. One of the methods most used to search is the KNN which at a first level of search covers all the elements of the database calculating the difference (or distance) between the information to be validated and the tuples. In the method the k tuples are selected next with less difference (or distance). At a second level of selection, the method lists the elements using a second metric of comparison, measuring other characteristics of the elements to be compared. The result of the search will be the tuple of the database with less distance (selected from the tuples resulting from the first level of search) in case this minimum distance is equal to or smaller than an identification threshold. Otherwise, that is, in case the smaller distance is higher than the identification threshold, it is considered that the information to be searched in the database does not exist in the database. There exist in the state of the art other methodologies that improve or refine this KNN method, namely starting from searching in smaller searches or using some characteristics to reduce the dimension of the search. Further, there exist indexing techniques for databases that allow making indexed search to a direct information to be searched, for example, using part of the information to be searched as a search index in a database, that is, as a manner of listing the tuples.

In another embodiment of the present invention, the step of validation of authenticity of at least one image to be validated (4) and of at least one digital marker to be validated (6), materialized in an object to be validated (2), comprises the following steps:

i. Capture of at least one image to be validated (106) with an optical reader (11) present in a computer equipment (10);

ii. Calculation of the descriptors of at least one image to be validated (107) executed by the computer equipment (10);

iii. Execution of a reading with the optical reader (11) of at least one encoded information in at least one digital marker to be validated (6), where the referred encoded information comprises the descriptors of the original image (7);

iv. Validation of an image to be validated in an object to be validated (112) by means of the comparison executed in the computer equipment (10) of the descriptors of the image to be validated (8) with the descriptors of the original image (7);

v. Decision on the authenticity of an object to be validated (113) in the computer equipment (10).

This embodiment waives the use of a server and a computer network of equipment interlinked by a communications system. In other words, according to this embodiment, the method of verification of the authenticity of an object to be validated (2) can be carried out in an offline mode, using essentially the computer program installed in the computer equipment (10).

In this previously described embodiment, as illustrated in Figure 8, a computer equipment (10) that can be a smartphone, comprising optical reader (11), that can be a smartphone camera, captures the image of an object to be validated (106) and the computer equipment (10) calculates the descriptors of at least one image to be validated (107). The step of validation of an image to be validated (112) and of the decision on the authenticity of an object to be validated (113) is executed in the computer equipment itself (10), where the descriptors calculated for the image to be validated (4) are compared with the descriptors of the original image (3), which are encoded in the digital marker to be and are read by means of optical reader (11).

For any of the embodiments illustrated in figures 8, 9 and 10, in the decision step, if the difference between the values calculated for the descriptors of the image to be validated (8) and the reference values of the descriptors in the original image (7) is higher than a pre-established limit, the decision on the authenticity of the object to be validated (113), taken in the server (12) will be considered negative, that is, the object to be validated (2) will not be considered authentic. On the other hand, if the difference between the values calculated for the descriptors of the image to be validated (8) and the reference values of the descriptors of the original image (7) are within a pre-established acceptance range, the decision on the authenticity of the object to be validated (113), taken in the server (12) will be considered positive, that is, the object to be validated (2) will be considered authentic. The decision as to the authenticity is, in any of the two cases, sent to the computer equipment (10), which allows the exhibition of the result of the method of verification of the authenticity to the user.

As regards the step of decision on an object to be validated, existing two vectors of coordinates corresponding to the characteristics or descriptors duly aligned, it is possible to obtain a normalized vector of absolute differences, for example, of the perimeter of the contour of the image of the face of a person. This normalized vector of the absolute differences can be used in the decision step on the authenticity. In fact, it is possible to add the elements of this vector and decide on the authenticity based on the comparison with a limiting value.

The artificial neural networks can contribute to a more robust decision, when processing the differences of the vectors of the coordinates. The neural networks can be trained with a balanced set of examples and can comprise typically three layers in their architecture, apart from being configured to execute a binary test in the decision step. In an illustrative manner, the neural network can be configured to return a value close to zero in case of a positive authenticity and one in case of a negative authenticity. Tests carried out with 4500 examples in the training of the neural network, led to true positive result rates of 0,06 and false positive result rates of 0,95 with a limit of 0,50.

Due to this fact, one of the embodiments according to the present invention, in the decision step as to the authenticity of an object to be validated (113), initially a distance between the two vectors corresponding to the descriptors of the original image (7) and the descriptors of the image to be validated (8) is calculated where the distance can be an Euclidian distance or other metric of distance of the state of the art. Next, the sum of the absolute values of the differences of the two vectors of characteristic information referring to the descriptors in the original image (7) and the descriptors in the image to be validated (8) is calculated. In order to decide on the authenticity, in the preferred embodiments an artificial neural network is used.

In the original object (1) prepared in accordance with the method of the present invention, the creation and materialization of a digital marker with encoded information of the original image (5) is used, where the referred digital marker is one of the elements of the object according to the present invention capable of being submitted to the step of validation of the object. The digital marker consists in a machine-readable visual element for data representation. In the preferred embodiments of the present invention, the digital marker is a bidimensional matrix digital marker, selected from the group consisting of an AR augmented reality, an Aztec code, a 16K Code, a CRONTO code, a Dotcode, a Data Matrix, a JAB-Code, a MaxiCode, a PDF417 and a QR Code. In the even more preferred embodiments, the digital marker is a UniQode.

The step of materialization comprises one or more of the techniques of printing, stamping, burn out, deposition, and engraving. In the context of the printing techniques, are comprised techniques of flexography, offset, digital printing, gravure, and serigraphy. The burn out technique may be implemented by lasers.

The object with intensified security level against alteration and counterfeiting according to the present invention contemplates the materialization of an original image (3) and of the digital marker with encoded information of the original image (5) in a physical support (9), which can be selected from one or more of the group consisting in a cellulose base, a metallic base or a polymeric material base.

An original image (3) present in the original object can consist of at least one element selected from a photograph of the face of a person, an image associated to the quality control of a product, an image associated to the identification or traceability of a product, an image associated to biometric aspects and an image associated to the origin of a product.

The object with intensified security level against alteration and counterfeiting of the invention can be selected, for example, from among a stamp, a label, a tag, an official seal, a document, a banknote, an identity card, an identity document, a travel document, a diploma and a certificate. The object can comprise different visual elements, such as: printed images, security holograms, texts, barcodes (unidimensional or bidimensional), logos, watermarks, random patterns, guilloché, microtexts, among other graphic elements.

To proceed with the materialization of the original image (3) and of the digital marker with encoded information of the original image (5) inks enriched with insoluble metallic markers (glitter) can be used and with random positioning, in several levels of intensity. Additionally, special inks can be used that absorb or reflect infrared light, ultraviolet light, or polarized light. The materialization of the objects according to the present invention can also be carried out by means of iridescent pains, thermochromic inks, photochromic inks, optically variable inks, or magnetic inks.

As used in this description, the expressions "around" and "approximately" refer to intervals of values of more or less 10% of the specified number.

As used in this description, the expression "substantially" means that the real value is within around 10% of the desired value, variable or related limit, particularly within around 5% of the desired value, variable or related limit or particularly within around 1 % of the desired value, variable or related limit.

The object-matter described above is provided as an illustration of the present invention and must not be interpreted so as to limit it. The terminology used with the purpose of describing specific embodiments, according to the present invention, must not be interpreted to limit the invention. As used in the description, the definite and indefinite articles, in their singular form, aim at the interpretation with the inclusion of the plural forms, unless the context of the description specifically indicates the contrary. It will be understood that the expressions "comprise" and "include", when used in this description, specify the presence of the characteristics, the elements, the components, the steps and the related operations, but do not exclude the possibility of other characteristics, elements, components, steps and operations also being contemplated.

All the alterations, providing that they do not modify the essential characteristics of the following claims, must be considered within the scope of protection of the present invention.

**List of Reference Indications**

Numerical references legend:

(1) original object;

(2) object to be validated;

(3) original image;

(4) image to be validated;

(5) digital marker with encoded information of original image;

(6) digital marker to be validated;

(7) descriptor of original image;

(8) descriptor of image to be validated;

(9) physical support;

(10) computer equipment;

(11) optical reader;

(12) server;

(13) database;

(101) preparation of original image;

(102) encoding of original image;

(103) association of encoded information of an original image to an original digital marker;

(104) generation of an original digital marker;

(105) materialization of original object;

(106) Capture of at least one image to be validated;

(107) Calculation of descriptors of at least one image to be validated;

(108) decoding of descriptors of digital marker to be validated;

(109) directing by descriptors of digital marker to be validated to a server;

(110) transmission of image to be validated and of a digital marker to be validated to a server;

(111) Search in at least one database by descriptors of original image;

(112) validation of image to be validated in an object to be validated;

(113) decision on authenticity of object to be validated;

**Claims**

1. Computer implemented method for intensifying the security level against alteration and counterfeiting of an object and to provide the validation of authenticity of an image present in an object **characterized by** comprising the following steps:

   a) Processing of at least one original image (3), wherein at least one original image (3) is a photograph of the face of a person;
   b) Association of at least one information to be encoded present in the original image (3) to one or more graphic element patterns for representation of data in a machine-readable visual element;
   c) Generation of at least one digital marker with encoded information of the original image (5) where the digital marker (5) comprises at least one pattern of graphic elements for representation of data obtained from step b), wherein said machine-readable visual element for data representation is said digital marker with encoded information of the original image (5), which is a bidimensional matrix digital marker; wherein the encoded information of the original image comprises descriptors of the original image (7);
   d) Validation of the authenticity of at least one image to be validated (4) and of at least one digital marker to be validated (6), materialized in an object to be validated (2), by means of the comparison of encoded information calculated from at least one image to be validated (4) with the encoded information corresponding to at least one original image (3) and by means of the processing of the encoded information present in at least one digital marker to be validated (6) and the processing of the encoded information present in at least one digital marker with encoded information of the original image (5), wherein said image to be validated (4) consists in a photograph of an image;
   e) Decision on the authenticity of at least one image to be validated (4) and of at least one digital marker to be validated (6) materialized in an object to be validated (2);

   wherein the step d) of validation of authenticity of at least one image to be validated (4) and of at least one digital marker to be validated (6), materialized in an object to be validated (2) comprises the comparison of one or more of geometric characteristics and/or one or more texture characteristics and/or one or more three-dimensional depth characteristics and/or one or more particle density random dispersion characteristics in the image to be validated (4) with the respective characteristics in the original image (3), where the referred characteristics of the image to be validated (4) and of the original image (3) are defined, respectively, by means of one or more descriptors of the image to be validated (8) and by means of one or more of the descriptors of the original image (7);

wherein the step d) of validation of authenticity of at least one image to be validated (4) and at least one digital marker to be validated (6), materialized in an object to be validated (2), comprises the use of an analysis by means of the relation of the distances between the descriptors of the image to be validated (8) and the descriptors of the original image (7), comprising weighing factors associated to one or more of the referred distance relations;

wherein the step e) of decision on the authenticity of at least one image to be validated (4) and of at least one digital marker to be validated (6) materialized in an object to be validated (2) comprises taking into account whether an absolute and a normalized difference between vectors of the descriptors of the original image (7) and vectors of the descriptors of the image to be validated (8) fit into a pre-determined acceptable range;

wherein the information to be encoded present in the original image (3) comprises one or more descriptors of the original image (7) associated to the geometric characteristics of one or more elements of the face selected from the group consisting of the contour of the face, the mouth, the nose, the eyes, the eyebrows, the cheeks and the chin.

2. Computer implemented method for intensifying the security level against alteration and counterfeiting of an object and to provide the validation of authenticity of an image present in an object according to claim 1, **characterized by** the step of validation of the authenticity comprising a step of rectification of the image to be validated (4) in relation to the original image (3) and optionally a step of rectification of the digital marker to be validated (6) in relation to the digital marker with information encoded of the original image (5).

3. Computer implemented method for intensifying the security level against alteration and counterfeiting of an object and to provide the validation of authenticity of an image present in an object according to any one of the preceding claims, **characterized by** in the step of validation of the authenticity of at least one image to be validated (4) and of at least one digital marker to be validated (6), materialized in an object to be validated (2), the analysis of a receiver operating characteristic curve (ROC curve) being used.

4. Computer implemented method for intensifying the security level against alteration and counterfeiting of an object and to provide the validation of authenticity of an image present in an object according to any one of the preceding claims, **characterized by** in the step of validation of the authenticity of at least one image to be validated (4) and of at least one digital marker to be validated (6), materialized in an object to be validated (2), being used an analysis by means of the comparison between the coordinates of the descriptors of the image to be validated (8) and the coordinates of the descriptors of the original image (7), optionally comprising weighing factors associated to one or more of the respective descriptors.

5. Computer implemented method for intensifying the security level against alteration and counterfeiting of an object and to provide the validation of authenticity of an image present in an object according to any one of the preceding claims, **characterized by** in the step of validation of the authenticity of at least one image to be validated (4) and at least one digital marker to be validated (6), materialized in an object to be validated (2) being used an analysis by means of a neural network configured by means of the following steps:

   i. Selection of a first sample set with a number of coordinates of the descriptors in the original image (7) for training of the neural network;
   ii. Selection of a second sample set with a number of coordinates of the descriptors of the image to be validated (8) for training of the neural network;
   iii. Establishing the normalized differences between the coordinates of the descriptors of the original image (7) and the coordinates of the descriptors of the image to be validated (8);
   iv. Establishing the acceptance value intervals for positive verification results between the original image (3) and the image to be validated (4).

6. Computer implemented method for intensifying the security level against alteration and counterfeiting of an object and to provide the validation of authenticity of an image present in an object according to any one of the preceding claims, **characterized by** in the step of validation of authenticity of at least one image to be validated (4) and at least one digital marker to be validated (6), materialized in an object to be validated (2) comprising the analysis of the characteristics of the texture in the original image (3) by means of one of the techniques of the local binary pattern histograms (LBP), the histogram of oriented gradients (HOG) and the gray level co-occurrence matrix (GLCM).

7. Computer implemented method for intensifying the security level against alteration and counterfeiting of an object and to provide the validation of authenticity of an image present in an object according to claim 6, **characterized by** there being used descriptors of the original image (7) and descriptors of the image to be validated (8), obtained from the application of one or more of the techniques of the local binary pattern histograms (LBP), the histogram of oriented gradients (HOG) and the gray level co-occurrence matrix (GLCM), where the differences between the referred techniques applied to one or more descriptors of the original image (7) and one or more of the descriptors of the image to be validated (8) are applied.

8. Computer implemented method for intensifying the security level against alteration and counterfeiting of an object and to provide the validation of authenticity of an image present in an object according to the preceding claim, **characterized by** at least one digital marker being a UniQode.

9. Computer implemented method for intensifying the security level against alteration and counterfeiting of an object and to provide the validation of authenticity of an image present in an object according to any one of the preceding claims, **characterized by** in the step of validation of authenticity of at least one image to be validated (4) and of at least one digital marker to be validated (6), materialized in an object to be validated (2), being used at least one optical reader (10), preferably a photographic camera.

10. Computer implemented method for intensifying the security level against alteration and counterfeiting of an object and to provide the validation of authenticity of an image present in an object according to any one of claims 1 to 9, **characterized by** the step of validation of authenticity of at least one image to be validated (4) and of at least one digital marker to be validated (6), materialized in an object to be validated (20, comprising the following steps:

   i. Capture of at least one image to be validated (106) with an optical reader (11) present in a computer equipment (10);
   ii. Calculation of the descriptors of at least one image to be validated (107) executed by the computer equipment (10);
   iii. Executing a reading with the optical reader (11) of at least one encoded information in at least one digital marker to be validated (6), where the referred reading promotes the orientation by the descriptors of the digital marker to validate to a server (109) and promotes the transmission of the descriptors of the image to be validated (8) calculated in the former step for the server (12);
   iv. Search in at least one database for the descriptors of the original image (111) where the database with encoded information of the original image (13) is accessed by means of the server (12);
   v. Validation of an image to be validated in an object to be validated (112) by the comparison in the server (12) of the descriptors of the image to be validated (8) with the descriptors of the original image (7);
   vi. Decision on the authenticity of an object to be validated (113) in the server (112);
   vii. Transmission of the decision on the authenticity by server (12) to the computer equipment (10).

11. Computer implemented method for intensifying the security level against alteration and counterfeiting of an object and to provide the validation of authenticity of an image present in an object according to any one of claims 1 to 9, **characterized by** the step of validation of the authenticity of at least one image to be validated (4) and of at least one digital marker to be validated (6) materialized in an object to be validated (2), comprising the following steps:

   i. Capture of at least one image to be validated (106) and of the image of a marker to be validated with an optical reader (11) present in a computer equipment (10);
   ii. Transmission of at least one image to be validated and at least one digital marker to be validated to a server (110);
   iii. Reception of at least one image to be validated (4) and of at least one digital marker to be validated (6) by a server (12);
   iv. Calculation of the descriptors of at least one image to be validated (107) executed by the server (12);
   v. Decoding of the descriptors of the digital marker to be validated (108) executed by the server (12);
   vi. Search in at least one database for the descriptors of the original image (111) where the database with encoded information of the original image (13) is accessed by means of the server (12);
   vii. Validation of an image to be validated in an object to be validated (112) by means of the comparison in the server (12) of the descriptors of the image to be validated (8) with the descriptors of the original image (7);
   viii. Decision on the authenticity of an object to be validated (113) in the server (12);

ix. Transmission of the decision on the authenticity by server (12) to the computer equipment (10).

12. Computer implemented method for intensifying the security level against alteration and counterfeiting of an object and to provide the validation of authenticity of an image present in an object according to any one of claims 1 to 9, **characterized by** the step of validation of the authenticity of at least one image to be validated (4) and of at least one digital marker to be validated (6), materialized in an object to be validated (2), comprising the following steps:

   i. Capture of at least one image to be validated (106) with an optical reader (11) present in a computer equipment (10);
   ii. Calculation of the descriptors of at least one image to be validated (107) executed by the computer equipment (10);
   iii. Execution of a reading with the optical reader (11) of at least one encoded information in at least one digital marker to be validated (6), where the referred encoded information comprises the descriptors of the original image (7);
   iv. Validation of an image to be validated in an object to be validated (112) by means of the comparison executed in the computer equipment (10) of the descriptors of the image to be validated (8) with the descriptors of the original image (7);
   v. Decision on the authenticity of an object to be validated (113) in the computer equipment (10).

13. Method for preparing an original object (1) with an intensified security level against alteration and counterfeiting **characterized by** comprising the following steps:

   a) Processing of at least one original image (3), wherein at least one original image (3) is a photograph of the face of a person;
   b) Association of at least one information to be encoded present in the original image (3) to one or more graphic element patterns for data representation in a machine-readable visual element;
   c) Generation of at least one digital marker with encoded information of the original image (5) where the digital marker (5) comprises at least one graphic element pattern for data representation obtained from step b), wherein said machine-readable visual element for data representation is said digital marker with encoded information of the original image (5), which is a bidimensional matrix digital marker; and wherein the encoded information of the original image comprises descriptors of the original image (7); wherein the information to be encoded present in the original image (3) comprises one or more descriptors of the original image (7) associated to the geometric characteristics of one or more elements of the face selected from the group consisting of the contour of the face, the mouth, the nose, the eyes, the eyebrows, the cheeks and the chin; wherein the distances between the descriptors of the original image (7) are used for validation of authenticity of said original object (1), wherein said distances between the descriptors of the original image (7) comprise weighing factors associated to one or more of the referred distance relations;
   d) Materialization of at least one original image (3) and of at least one digital marker with encoded information of the original image (5) in a physical support (9) generating an original object (1).

14. Method for preparing an original object (1) with intensified security level against alteration and counterfeiting according to the preceding claim, **characterized by** the physical support (9) being selected from one or more of the group consisting in a cellulose base, a metallic base or a polymeric material base.

15. Method for preparing an original object (1) with intensified security level against alteration and counterfeiting according to the preceding claim, **characterized by** at least one digital marker being a UniQode.

16. Method for preparing an original object (1) with intensified security level against alteration and counterfeiting according to any one of claims 13 to 15, **characterized by** the step of materialization comprising one or more of the techniques of printing, stamping, burn out, deposition and engraving.

17. Original object (1) with intensified security level against alteration and counterfeiting **characterized by** the object comprising at least one original image (3) and at least one digital marker with encoded information of the original image (5) materialized in a physical support (9) to be prepared by means of the method defined in any one of claims 13 to 16; wherein said digital marker with encoded information of the original image (5) is a bidimensional matrix digital marker and the encoded information of the original image comprises descriptors of the original image (7); wherein at least one original image (3) is a photograph of the face of a person; wherein the information to be encoded present in the original image (3) comprises one or more descriptors of the original image (7) associated to the

19

geometric characteristics of one or more elements of the face selected from the group consisting of the contour of the face, the mouth, the nose, the eyes, the eyebrows, the cheeks and the chin.

18. Original object (1) with intensified security level against alteration and counterfeiting according to the preceding claim, **characterized by** the object being selected from among a stamp, a label, a tag, an official stamp, a document, a banknote, an identity card, an identity document, a travel document, a diploma and a certificate.

19. Original object (1) with intensified security level against alteration and counterfeiting according to the preceding claim, **characterized by** at least one digital marker with encoded information of the original image (5) being a UniQode.

20. Original object (1) with intensified security level against alteration and counterfeiting according to the preceding claim, **characterized by** the UniQode comprising one or more encoded information referring to the traceability in the preparation of the original object (1), one or more encoded information used in the validation of the authenticity of at least one image to be validated (4) and one or more encoded information about characteristics of the original object (1).

21. Original object (1) with intensified security level against alteration and counterfeiting according to any one of claims 17 to 20, **characterized by** the physical support (9) being selected from one or more of the group consisting of a cellulose base, a metallic base or a polymeric material base.

22. Original object (1) with intensified security level against alteration and counterfeiting according to any one of claims 17 to 21, **characterized by** the step of materialization comprising one or more of the techniques of printing, stamping, burn out, deposition and engraving.

23. Computer equipment (10), **characterized by** comprising means adapted to execute the steps of the method defined in any one of claims 1 to 12.

24. Computer equipment (10), **characterized by** comprising means adapted to execute the steps of the method defined in any one of claims 13 to 16.

25. Computer program, **characterized by** comprising instructions to provide that the computer equipment (10) as defined in claim 23, execute the steps of the method defined in any one of claims 1 to 12.

26. Computer program, **characterized by** comprising instructions to provide the computer equipment (10) as defined in claim 24 execute the steps of the method defined in any one of claims 13 to 16.

27. Computer-readable data carrier, **characterized by** having stored thereon the computer program of claim 25.

28. Computer-readable data carrier, **characterized by** having stored thereon the computer program of claim 26.

**Patentansprüche**

1. Computerimplementiertes Verfahren zur Erhöhung des Sicherheitsniveaus eines Objekts gegen Veränderung und Fälschung und zur Validierung der Echtheit eines in einem Objekt vorhandenen Bildes, **dadurch gekennzeichnet, dass** es die folgenden Schritte umfasst:

a) Verarbeitung mindestens eines Originalbildes (3), worin mindestens ein Originalbild (3) eine Fotografie des Gesichts einer Person ist;
b) Zuordnung von mindestens einer im Originalbild (3) vorhandenen zu kodierenden Information (3) zu einem oder mehreren grafischen Elementmustern zur Darstellung von Daten in einem maschinenlesbaren visuellen Element;
c) Erzeugung von mindestens einem digitalen Marker mit kodierten Informationen des Originalbildes (5), wobei der digitale Marker (5) mindestens ein Muster von grafischen Elementen zur Darstellung von Daten umfasst, die aus Schritt b) erhalten wurden, worin das besagte maschinenlesbare visuelle Element zur Datendarstellung der besagte digitale Marker mit codierten Informationen des Originalbildes (5) ist, bei dem es sich um einen zweidimensionalen digitalen Matrixmarker handelt, worin die kodierte Information des Originalbildes Deskriptoren des Originalbildes (7) umfasst;

d) Validierung der Echtheit mindestens eines zu validierenden Bildes (4) und von mindestens einem zu validierenden digitalen Marker (6), materialisiert in einem zu validierenden Objekt (2), durch den Vergleich von kodierten Informationen, die aus mindestens einem zu validierenden Bild (4) berechnet wurden, mit der codierten Information, die mindestens einem Originalbild (3) entspricht, und durch die Verarbeitung der kodierten Informationen, die in mindestens einem zu validierenden digitalen Marker (6) sowie die Verarbeitung der codierten Informationen, die in mindestens einem digitalen Marker mit den kodierten Informationen des Originalbildes (5) vorhanden sind, wobei das besagte zu validierende Bild (4) aus einer Fotografie eines Bildes besteht;

e) Entscheidung über die Echtheit von mindestens einem zu validierenden Bild (4) und von mindestens einem zu validierenden digitalen Marker (6), der in einem zu validierenden Objekt (2) materialisiert ist;

worin der Schritt d) der Validierung der Echtheit von mindestens einem zu validierenden Bild (4) und von mindestens einem zu validierenden digitalen Marker (6), materialisiert in einem zu validierenden Objekt (2), den Vergleich einer oder mehrerer geometrischer Eigenschaften und/oder einer oder mehrerer Textureigenschaften und/oder einer oder mehrerer dreidimensionaler Tiefeneigenschaften und/oder einer oder mehrerer zufälliger Dispersionsmerkmale der Partikeldichte in dem zu validierenden Bild (4) mit den jeweiligen Merkmalen des Originalbildes (3) umfasst, wobei die genannten Merkmale des zu validierenden Bildes (4) und des Originalbildes (3) jeweils anhand eines oder mehrerer Deskriptoren des zu validierenden Bildes (8) und anhand eines oder mehrerer Deskriptoren des Originalbildes (7) definiert werden;

worin der Schritt d) der Validierung der Echtheit mindestens eines zu validierenden Bildes (4) und mindestens eines zu validierenden digitalen Markers (6), der in einem zu validierenden Objekt (2) materialisiert ist, die Verwendung einer Analyse mittels des Verhältnisses der Abstände zwischen den Deskriptoren des zu validierenden Bildes (8) und den Deskriptoren des Originalbildes (7) umfasst, einschließlich der Gewichtungsfaktoren, die mit einem oder mehreren der genannten Abstandsbeziehungen verbunden sind;

worin der Schritt e) der Entscheidung über die Echtheit mindestens eines zu validierenden Bildes (4) und mindestens eines zu validierenden digitalen Markers (6), der in einem zu validierenden Objekt (2) materialisiert ist, die Berücksichtigung umfasst, ob eine absolute und eine normierte Differenz zwischen den Vektoren der Deskriptoren des Originalbildes (7) und den Vektoren der Deskriptoren des zu validierenden Bildes (8) in einen vorher festgelegten akzeptablen Bereich passt;

worin die im Originalbild (3) vorhandenen zu kodierenden Informationen einen oder mehrere Deskriptoren des Originalbildes (7) umfassen, die den geometrischen Eigenschaften eines oder mehrerer Elemente des Gesichts zugeordnet sind, die aus der Gruppe ausgewählt werden, die aus der Kontur des Gesichts, dem Mund, der Nase, den Augen, den Augenbrauen, den Wangen und dem Kinn besteht.

2. Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß Anspruch 1, **dadurch gekennzeichnet, dass** der Schritt der Validierung der Echtheit einen Schritt der Berichtigung des zu validierenden Bildes (4) in Bezug auf das Originalbild (3) und optional einen Schritt der Berichtigung des zu validierenden digitalen Markers (6) in Bezug auf den digitalen Marker mit kodierten Informationen des Originalbildes (5) umfasst.

3. Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß einem der vorhergehenden Ansprüche, **dadurch gekennzeichnet, dass** im Schritt der Validierung der Echtheit mindestens eines zu validierenden Bildes (4) und mindestens eines zu validierenden digitalen Markers (6), der in einem zu validierenden Objekt materialisiert ist (2), die Analyse einer Empfänger-Betriebskennlinie (ROC-Kurve) verwendet wird.

4. Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß einem der vorhergehenden Ansprüche, **dadurch gekennzeichnet, dass** im Schritt der Validierung der Echtheit mindestens eines zu validierenden Bildes (4) und mindestens eines zu validierenden digitalen Markers (6), der in einem zu validierenden Objekt materialisiert ist (2), eine Analyse mittels des Vergleichs zwischen den Koordinaten der Deskriptoren des zu validierenden Bildes (8) und den Koordinaten der Deskriptoren des Originalbildes (7) verwendet wird, die optional Gewichtungsfaktoren umfasst, die einem oder mehreren der jeweiligen Deskriptoren zugeordnet sind.

5. Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß einem der vorhergehenden Ansprüche, **dadurch gekennzeichnet, dass** im Schritt der Validierung der Echtheit mindestens eines zu validierenden Bildes (4) und mindestens eines zu validierenden digitalen Markers (6), der in einem zu validierenden Objekt (2) materialisiert ist, eine Analyse mittels eines neuronalen Netzes verwendet wird, das mittels der folgenden Schritte konfiguriert wird:

i. Auswahl eines ersten Probensatzes mit einer Anzahl von Koordinaten der Deskriptoren im Originalbild (7) zum Training des neuronalen Netzes;

ii Auswahl eines zweiten Probensatzes mit einer Anzahl von Koordinaten der Deskriptoren des zu validierenden Bildes (8) zum Training des neuronalen Netzes;

iii Ermittlung der normierten Differenzen zwischen den Koordinaten der Deskriptoren des Originalbildes (7) und den Koordinaten der Deskriptoren des zu validierenden Bildes (8);

iv. Festlegung der Akzeptanzwerteintervalle für positive Verifikationsergebnisse zwischen dem Originalbild (3) und dem zu validierenden Bild (4).

6. Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß einem der vorhergehenden Ansprüche, **dadurch gekennzeichnet, dass** im Schritt der Validierung der Echtheit mindestens eines zu validierenden Bildes (4) und mindestens eines zu validierenden digitalen Markers (6), der in einem zu validierenden Objekt (2) materialisiert ist, die Analyse der Eigenschaften der Textur im Originalbild (3) mittels einer der Techniken der lokalen binären Musterhistogramme (LBP), des Histogramms der orientierten Gradienten (HOG) und der Grauwertematrix (GLCM) durchgeführt wird.

7. Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß Anspruch 6, **dadurch gekennzeichnet, dass** die Deskriptoren des Originalbildes (7) und Deskriptoren des zu validierenden Bildes (8) verwendet werden, die durch die Anwendung einer oder mehrerer der Techniken der lokalen binären Musterhistogramme (LBP) des Histogramm der orientierten Gradienten (HOG) und und der Grauwertematrix (GLCM) erhalten werden, wobei die Unterschiede zwischen den genannten Techniken auf einen oder mehrere Deskriptoren des Originalbildes (7) und einen oder mehrere der Deskriptoren des zu validierenden Bildes (8) angewendet werden.

8. Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß dem vorhergehenden Anspruch, **dadurch gekennzeichnet, dass** mindestens ein digitaler Marker ein UniQode ist.

9. Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß einem der vorhergehenden Ansprüche, **dadurch gekennzeichnet, dass** im Schritt der Validierung der Echtheit mindestens eines zu validierenden Bildes (4) und mindestens eines zu validierenden digitalen Markers (6), der in einem zu validierenden Objekt (2) materialisiert ist, mindestens ein optisches Lesegerät (10), vorzugsweise eine Fotokamera verwendet wird.

10. Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß einem der Ansprüche 1 bis 9, **gekennzeichnet durch** den Schritt der Validierung der Echtheit mindestens eines zu validierenden Bildes (4) und mindestens eines zu validierenden digitalen Markers (6), der in einem zu validierenden Objekt (2) materialisiert ist, der aus folgenden Schritten besteht:

i. Erfassung von mindestens einem zu validierenden Bild (106) mit einem in einer Computerausrüstung (10) vorhandenen optischen Lesegerät (11);

ii Berechnung der Deskriptoren von mindestens einem zu validierenden Bild (107), ausgeführt durch die Computerausrüstung (10);

iii Durchführung einer Auslesung mindestens einer kodierten Information in mindestens einem zu validierenden digitalen Marker (6) mit dem optischen Lesegerät (11), wobei die referenzierte Auslesung die Orientierung des zu validierenden digitalen Markers durch die Deskriptoren zur Validierung an einen Server fördert (109) sowie die Übermittlung der Deskriptoren des zu validierenden Bildes (8) fördert, die im vorherigen Schritt für den Server (12) berechnet wurden;

iv. Suche nach den Deskriptoren des Originalbildes (111) in mindestens einer Datenbank, wobei die Datenbank mit den codierten Informationen des Originalbildes (13) mittels des Servers (12) abgerufen wird;

v. Validierung eines zu validierenden Bildes in einem zu validierenden Objekt (112) durch den Vergleich der Deskriptoren des zu validierenden Bildes (8) mit den Deskriptoren des Originalbildes (7) auf dem Server (12);

vi. Entscheidung über die Echtheit eines zu validierenden Objekts (113) auf dem Server (112);

vii. Übermittlung der Entscheidung über die Echtheit durch den Server (12) an die Computerausrüstung (10).

**11.** Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß einem der Ansprüche 1 bis 9, **gekennzeichnet durch** den Schritt der Validierung der Echtheit mindestens eines zu validierenden Bildes (4) und mindestens eines zu validierenden digitalen Markers (6), der in einem zu validierenden Objekt materialisiert ist (2), bestehend aus folgenden Schritten:

i. Erfassung von mindestens einem zu validierenden Bild (106) und eines Bildes eines zu validierenden Markers mit einem optischen Lesegerät (11), das in einer Computerausrüstung (10) vorhanden ist;
ii Übermittlung von mindestens einem zu validierenden Bild und mindestens einem zu validierenden digitalen Marker an einen Server (110);
iii Empfang mindestens eines zu validierenden Bildes (4) und von mindestens einem zu validierenden digitalen Marker (6) durch einen Server (12);
iv. Berechnung der Deskriptoren von mindestens einem zu validierenden Bild (107), ausgeführt durch den Server (12);
v. Decodierung der Deskriptoren des zu validierenden digitalen Markers (108), ausgeführt durch den Server (12);
vi. Suche nach den Deskriptoren des Originalbildes (111) in mindestens einer Datenbank, wobei die Datenbank mit codierten Informationen des Originalbildes (13) mittels des Servers (12) abgerufen wird;
vii. Validierung eines zu validierenden Bildes in einem zu validierenden Objekt (112) durch den Vergleich der Deskriptoren des zu validierenden Bildes (8) mit den Deskriptoren des Originalbildes (7) auf dem Server (12);
viii. Entscheidung über die Echtheit eines zu validierenden Objekts (113) auf dem Server (12);
ix. Übermittlung der Entscheidung über die Echtheit durch den Server (12) an die Computerausrüstung (10).

**12.** Computerimplementiertes Verfahren zur Erhöhung des Sicherheitsniveaus eines Objekts gegen Veränderung und Fälschung und zur Validierung der Echtheit eines in einem Objekt vorhandenen Bildes gemäß einem der Ansprüche 1 bis 9, **dadurch gekennzeichnet, dass** der Schritt der Validierung der Echtheit mindestens eines zu validierenden Bildes (4) und mindestens eines zu validierenden digitalen Markers (6), der in einem zu validierenden Objekt (2) materialisiert ist (2), die folgenden Schritte umfasst:

i. Erfassung von mindestens einem zu validierenden Bild (106) mit einem in einer Computerausrüstung (10) vorhandenen optischen Lesegerät (11);
ii Berechnung der Deskriptoren von mindestens einem zu validierenden Bild (107), ausgeführt durch die Computerausrüstung (10);
iii Durchführung einer Auslesung mindestens einer kodierten Information in mindestens einem zu validierenden digitalen Marker (6) mit dem optischen Lesegerät (11), wobei die referenzierte kodierte Information die Deskriptoren des Originalbildes umfasst (7);
iv. Validierung eines zu validierenden Bildes in einem zu validierenden Objekt (112) durch den in der Computerausrüstung (10) durchgeführten Vergleich der Deskriptoren des zu validierenden Bildes (8) mit den Deskriptoren des Originalbildes (7);
v. Entscheidung über die Echtheit eines zu validierenden Objekts (113) in der Computerausrüstung (10).

**13.** Verfahren zur Herstellung eines Originalobjekts (1) mit einem erhöhten Sicherheitsniveau gegen Veränderung und Fälschung, **dadurch gekennzeichnet, dass** es folgende Schritte umfasst:

a) Verarbeitung mindestens eines Originalbildes (3), worin mindestens ein Originalbild (3) eine Fotografie des Gesichts einer Person ist;
b) Zuordnung von mindestens einer im Originalbild vorhandenen zu kodierenden Information (3) zu einem oder mehreren grafischen Elementmustern zur Datendarstellung in einem maschinenlesbaren visuellen Element;
c) Erzeugung von mindestens einem digitalen Marker mit kodierten Informationen des Originalbildes (5), wobei der digitale Marker (5) mindestens ein grafisches Elementmuster zur Darstellung von Daten umfasst, die aus Schritt b) erhalten wurden, worin das besagte maschinenlesbare visuelle Element zur Datendarstellung der besagte digitale Marker mit codierten Informationen des Originalbildes (5) ist, bei dem es sich um einen zweidimensionalen digitalen Matrixmarker handelt, und worin die kodierte Information des Originalbildes Deskriptoren des Originalbildes (7) umfasst, worin die im Originalbild (3) vorhandenen zu kodierenden Informationen einen oder mehrere Deskriptoren des Originalbildes (7) umfassen, die den geometrischen Eigenschaften eines oder mehrerer Elemente des Gesichts zugeordnet sind, ausgewählt aus der Gruppe, die aus der Kontur des Gesichts, dem Mund, der Nase, den Augen, den Augenbrauen, den Wangen und dem Kinn besteht, worin die Abstände zwischen den Deskriptoren des Originalbildes (7) zur Validierung der Echtheit des Originalobjekts (1) verwendet werden, wobei die besagten Abstände zwischen den Deskriptoren des Originalbildes (7) Gewichtungsfaktoren umfassen, die mit einer oder mehreren der genannten Abstandsbeziehungen verbunden sind;

d) Materialisierung mindestens eines Originalbildes (3) und mindestens eines digitalen Markers mit kodierten Informationen des Originalbildes (5) auf einem physischen Träger (9), wodurch ein Originalobjekt (1) erzeugt wird.

14. Verfahren zur Herstellung eines Originalobjekts (1) mit einem erhöhten Sicherheitsniveau gegen Veränderung und Fälschung gemäß dem vorhergehenden Anspruch, **dadurch gekennzeichnet, dass** der physische Träger (9) aus einer oder mehreren Gruppen ausgewählt wird, die aus einer Zellulosebasis, einer Metallbasis oder einer polymeren Materialbasis bestehen.

15. Verfahren zur Herstellung eines Originalobjekts (1) mit einem erhöhten Sicherheitsniveau gegen Veränderung und Fälschung gemäß dem vorangehenden Anspruch, **dadurch gekennzeichnet, dass** mindestens ein digitaler Marker ein UniQode ist.

16. Verfahren zur Herstellung eines Originalobjekts (1) mit einem erhöhten Sicherheitsniveau gegen Veränderung und Fälschung gemäß einem der Ansprüche 13 bis 15, **dadurch gekennzeichnet, dass** der Materialisierungsschritt eine oder mehrere Techniken des Druckens, Stanzens, Ausbrennens, Abscheidens und Gravierens umfasst.

17. Originalobjekt (1) mit einem erhöhten Sicherheitsniveau gegen Veränderung und Fälschung, **dadurch gekennzeichnet, dass** das Objekt mindestens ein Originalbild (3) und mindestens einen digitalen Marker mit codierten Informationen des Originalbildes (5) umfasst, das auf einem physischen Träger (9) materialisiert wird, der mittels des in einem der Ansprüche 13 bis 16 definierten Verfahrens herzustellen ist; worin der besagte digitale Marker mit kodierten Informationen des Originalbildes (5) ein zweidimensionaler digitaler Matrixmarker ist und die codierte Information des Originalbildes Deskriptoren des Originalbildes (7) umfasst; worin mindestens ein Originalbild (3) eine Fotografie des Gesichts einer Person ist; worin die im Originalbild (3) vorhandenen zu kodierenden Informationen einen oder mehrere Deskriptoren des Originalbildes (7) umfassen, die den geometrischen Eigenschaften eines oder mehrerer Elemente des Gesichts zugeordnet sind, ausgewählt aus der Gruppe, die aus der Kontur des Gesichts, dem Mund, der Nase, den Augen, den Augenbrauen, den Wangen und dem Kinn besteht.

18. Originalobjekt (1) mit erhöhtem Sicherheitsniveau gegen Veränderung und Fälschung gemäß dem vorhergehenden Anspruch, **dadurch gekennzeichnet, dass** das Objekt aus einem Stempel, einem Etikett, einem Anhänger, einem Amtsstempel, einem Dokument, einer Banknote, einem Personalausweis, einem Ausweisdokument, einem Reisedokument, einem Diplom und einem Zertifikat ausgewählt wird.

19. Originalobjekt (1) mit erhöhtem Sicherheitsniveau gegen Veränderung und Fälschung gemäß dem vorhergehenden Anspruch, **dadurch gekennzeichnet, dass** mindestens ein digitaler Marker mit kodierten Informationen des Originalbildes (5) ein UniQode ist.

20. Originalobjekt (1) mit erhöhtem Sicherheitsniveau gegen Veränderung und Fälschung gemäß dem vorhergehenden Anspruch, **dadurch gekennzeichnet, dass** der UniQode eine oder mehrere codierte Informationen über die Rückverfolgbarkeit bei der Herstellung des Originalobjekts (1), eine oder mehrere codierte Informationen, die zur Validierung der Echtheit mindestens eines zu validierenden Bildes verwendet werden (4), und eine oder mehrere codierte Informationen über Eigenschaften des Originalobjekts (1) umfasst

21. Originalobjekt (1) mit erhöhtem Sicherheitsniveau gegen Veränderung und Fälschung gemäß einem der Ansprüche 17 bis 20, **dadurch gekennzeichnet, dass** der physische Träger (9) aus einer oder mehreren Gruppen ausgewählt wird, die aus einer Zellulosebasis, einer Metallbasis oder einer polymeren Materialbasis bestehen.

22. Originalobjekt (1) mit erhöhtem Sicherheitsniveau gegen Veränderung und Fälschung gemäß einem der Ansprüche 17 bis 21, **dadurch gekennzeichnet, dass** der Materialisierungsschritt eine oder mehrere der Techniken des Druckens, Stanzens, Ausbrennens, Abscheidens und Gravierens umfasst.

23. Computerausrüstung (10), **dadurch gekennzeichnet, dass** sie Mittel umfasst, die geeignet sind, die Schritte des in einem der Ansprüche 1 bis 12 genannten Verfahrens durchzuführen.

24. Computerausrüstung (10), **dadurch gekennzeichnet, dass** sie Mittel umfasst, die geeignet sind, die Schritte des in einem der Ansprüche 13 bis 16 genannten Verfahrens durchzuführen.

**25.** Computerprogramm, **dadurch gekennzeichnet, dass** es Anweisungen enthält, die es ermöglichen, dass die Computerausrüstung (10) die in einem der Ansprüche 1 bis 12 definierten Schritte des Verfahrens gemäß Anspruch 23 ausführt.

**26.** Computerprogramm, **dadurch gekennzeichnet, dass** es Anweisungen enthält, die es ermöglichen, dass die Computerausrüstung (10) die in einem der Ansprüche 13 bis 16 definierten Schritte des Verfahrens gemäß Anspruch 24 ausführt

**27.** Computerlesbarer Datenträger, **dadurch gekennzeichnet, dass** darauf das Computerprogramm gemäß Anspruch 25 gespeichert ist.

**28.** Computerlesbarer Datenträger, **dadurch gekennzeichnet, dass** darauf das Computerprogramm gemäß Anspruch 26 gespeichert ist.

**Revendications**

**1.** Procédé mis en oeuvre par ordinateur pour l'intensification du niveau de sécurité contre l'altération et la contrefaçon d'un objet et pour fournir la validation de l'authenticité d'une image présente dans un objet, **caractérisé en ce qu'**il comprend les étapes suivantes :

a) Le traitement d'au moins une image d'origine (3), dans laquelle au moins une image d'origine (3) est une photographie du visage d'une personne ;
b) L'association d'au moins une information à coder présente dans l'image d'origine (3) à un ou plusieurs motifs d'éléments graphiques pour la représentation de données dans un élément visuel lisible par machine ;
c) La génération d'au moins un marqueur numérique avec des informations codées de l'image d'origine (5), où le marqueur numérique (5) comprend au moins un motif d'éléments graphiques pour la représentation de données obtenues à partir de l'étape b), dans lequel ledit élément visuel lisible par machine pour la représentation de données est ledit marqueur numérique avec des informations codées de l'image d'origine (5), qui est un marqueur numérique matriciel bidimensionnel ; dans lequel les informations codées de l'image d'origine comprennent des descripteurs de l'image d'origine (7) ;
d) La validation de l'authenticité d'au moins une image à valider (4) et d'au moins un marqueur numérique à valider (6), matérialisés dans un objet à valider (2), au moyen de la comparaison d'informations codées calculées à partir d'au moins une image à valider (4) avec les informations codées correspondant à au moins une image d'origine (3) et au moyen du traitement des informations codées présentes dans au moins un marqueur numérique à valider (6) et du traitement des informations codées présentes dans au moins un marqueur numérique avec des informations codées de l'image d'origine (5), dans laquelle ladite image à valider (4) consiste en une photographie d'une image ;
e) La décision sur l'authenticité d'au moins une image à valider (4) et d'au moins un marqueur numérique à valider (6) matérialisés dans un objet à valider (2) ;
dans lequel l'étape d) de validation de l'authenticité d'au moins une image à valider (4) et d'au moins un marqueur numérique à valider (6), matérialisés dans un objet à valider (2) comprend la comparaison d'une ou plusieurs parmi des caractéristiques géométriques et/ou d'une ou plusieurs caractéristiques de texture et/ou d'une ou plusieurs caractéristiques de profondeur tridimensionnelle et/ou d'une ou plusieurs caractéristiques de dispersion aléatoire de densité de particules dans l'image à valider (4) avec les caractéristiques respectives dans l'image d'origine (3), où les caractéristiques mentionnées de l'image à valider (4) et de l'image d'origine (3) sont définies, respectivement, au moyen d'un ou plusieurs descripteurs de l'image à valider (8) et au moyen d'un ou plusieurs parmi les descripteurs de l'image d'origine (7) ;
dans lequel l'étape d) de validation de l'authenticité d'au moins une image à valider (4) et d'au moins un marqueur numérique à valider (6), matérialisés dans un objet à valider (2), comprend l'utilisation d'une analyse au moyen de la relation des distances entre les descripteurs de l'image à valider (8) et les descripteurs de l'image d'origine (7), comprenant des facteurs de pondération associés à une ou plusieurs parmi les relations de distance mentionnées ;
dans lequel l'étape e) de décision sur l'authenticité d'au moins une image à valider (4) et d'au moins un marqueur numérique à valider (6) matérialisés dans un objet à valider (2) comprend la prise en compte de si une différence absolue et normalisée entre des vecteurs des descripteurs de l'image d'origine (7) et des vecteurs des descripteurs de l'image à valider (8) s'inscrivent dans une plage acceptable prédéterminée ;
dans lequel les informations à coder présentes dans l'image d'origine (3) comprennent un ou plusieurs descripteurs de l'image d'origine (7) associés aux caractéristiques géométriques d'un ou plusieurs éléments du visage sélectionnés parmi le groupe constitué par le contour du visage, la bouche, le nez, les yeux, les sourcils, les joues et le menton.

2. Procédé mis en oeuvre par ordinateur pour l'intensification du niveau de sécurité contre l'altération et la contrefaçon d'un objet et pour fournir la validation de l'authenticité d'une image présente dans un objet selon la revendication 1, **caractérisé par** l'étape de validation de l'authenticité comprenant une étape de rectification de l'image à valider (4) par rapport à l'image d'origine (3) et éventuellement une étape de rectification du marqueur numérique à valider (6) par rapport au marqueur numérique avec des informations codées de l'image d'origine (5).

3. Procédé mis en oeuvre par ordinateur pour l'intensification du niveau de sécurité contre l'altération et la contrefaçon d'un objet et pour fournir la validation de l'authenticité d'une image présente dans un objet selon l'une quelconque des revendications précédentes, **caractérisé par,** dans l'étape de validation de l'authenticité d'au moins une image à valider (4) et d'au moins un marqueur numérique à valider (6), matérialisés dans un objet à valider (2), l'analyse d'une courbe caractéristique de fonctionnement du récepteur (courbe ROC) étant utilisée.

4. Procédé mis en oeuvre par ordinateur pour l'intensification du niveau de sécurité contre l'altération et la contrefaçon d'un objet et pour fournir la validation de l'authenticité d'une image présente dans un objet selon l'une quelconque des revendications précédentes, **caractérisé en ce que** dans l'étape de validation de l'authenticité d'au moins une image à valider (4) et d'au moins un marqueur numérique à valider (6), matérialisés dans un objet à valider (2), on utilise une analyse au moyen de la comparaison entre les coordonnées des descripteurs de l'image à valider (8) et les coordonnées des descripteurs de l'image d'origine (7), comprenant éventuellement des facteurs de pondération associés à un ou plusieurs parmi les descripteurs respectifs.

5. Procédé mis en oeuvre par ordinateur pour l'intensification du niveau de sécurité contre l'altération et la contrefaçon d'un objet et pour fournir la validation de l'authenticité d'une image présente dans un objet selon l'une quelconque des revendications précédentes, **caractérisé en ce que,** dans l'étape de validation de l'authenticité d'au moins une image à valider (4) et d'au moins un marqueur numérique à valider (6), matérialisé dans un objet à valider (2), on utilise une analyse au moyen d'un réseau neuronal configuré au moyen des étapes suivantes :

    i. La sélection d'un premier ensemble d'échantillons avec un certain nombre de coordonnées des descripteurs dans l'image d'origine (7) pour la formation du réseau neuronal ;
    ii. La sélection d'un second ensemble d'échantillons avec un certain nombre de coordonnées des descripteurs de l'image à valider (8) pour la formation du réseau neuronal ;
    iii. L'établissement des différences normalisées entre les coordonnées des descripteurs de l'image d'origine (7) et les coordonnées des descripteurs de l'image à valider (8) ;
    iv. L'établissement des intervalles de valeurs d'acceptation pour les résultats de vérification positifs entre l'image d'origine (3) et l'image à valider (4).

6. Procédé mis en oeuvre par ordinateur pour l'intensification du niveau de sécurité contre l'altération et la contrefaçon d'un objet et pour fournir la validation de l'authenticité d'une image présente dans un objet selon l'une quelconque des revendications précédentes, **caractérisé en ce que** dans l'étape de validation de l'authenticité d'au moins une image à valider (4) et d'au moins un marqueur numérique à valider (6), matérialisés dans un objet à valider (2) est comprise l'analyse des caractéristiques de la texture dans l'image d'origine (3) au moyen de l'une parmi les techniques des histogrammes de motifs binaires locaux (LBP), de l'histogramme de gradients orientés (HOG) et de la matrice de cooccurrence de niveaux de gris (GLCM).

7. Procédé mis en oeuvre par ordinateur pour l'intensification du niveau de sécurité contre l'altération et la contrefaçon d'un objet et pour fournir la validation de l'authenticité d'une image présente dans un objet selon la revendication 6, **caractérisé en ce qu'**on utilise ici des descripteurs de l'image d'origine (7) et des descripteurs de l'image à valider (8), obtenus à partir de l'application d'une ou plusieurs parmi les techniques des histogrammes de motifs binaires locaux (LBP), de l'histogramme de gradients orientés (HOG) et de la matrice de cooccurrence de niveaux de gris (GLCM), où les différences entre les techniques mentionnées appliquées à un ou plusieurs descripteurs de l'image d'origine (7) et à un ou plusieurs des descripteurs de l'image à valider (8) sont appliquées..

8. Procédé mis en oeuvre par ordinateur pour l'intensification du niveau de sécurité contre l'altération et la contrefaçon d'un objet et pour fournir la validation de l'authenticité d'une image présente dans un objet selon la revendication précédente, **caractérisé en ce qu'**au moins un marqueur numérique est un UniQode.

**9.** Procédé mis en oeuvre par ordinateur pour l'intensification du niveau de sécurité contre l'altération et la contrefaçon d'un objet et pour fournir la validation de l'authenticité d'une image présente dans un objet selon l'une quelconque des revendications précédentes, **caractérisé en ce que** dans l'étape de validation de l'authenticité d'au moins une image à valider (4) et d'au moins un marqueur numérique à valider (6), matérialisé dans un objet à valider (2), on utilise au moins un lecteur optique (10), de préférence un appareil photographique.

**10.** Procédé mis en oeuvre par ordinateur pour l'intensification du niveau de sécurité contre l'altération et la contrefaçon d'un objet et pour fournir la validation de l'authenticité d'une image présente dans un objet selon l'une quelconque des revendications 1 à 9, **caractérisé par** l'étape de validation de l'authenticité d'au moins une image à valider (4) et d'au moins un marqueur numérique à valider (6), matérialisés dans un objet à valider (20, comprenant les étapes suivantes :

> i. La capture d'au moins une image à valider (106) avec un lecteur optique (11) présent dans un équipement informatique (10) ;
> ii. Le calcul des descripteurs d'au moins une image à valider (107) exécuté par l'équipement informatique (10) ;
> iii. L'exécution d'une lecture avec le lecteur optique (11) d'au moins une information codée dans au moins un marqueur numérique à valider (6), où la lecture mentionnée favorise l'orientation par les descripteurs du marqueur numérique à valider vers un serveur (109) et favorise la transmission des descripteurs de l'image à valider (8) calculés à l'étape précédente pour le serveur (12) ;
> iv. La recherche dans au moins une base de données des descripteurs de l'image d'origine (111) où la base de données avec les informations codées de l'image d'origine (13) est accédée au moyen du serveur (12) ;
> v. La validation d'une image à valider dans un objet à valider (112) par la comparaison dans le serveur (12) des descripteurs de l'image à valider (8) avec les descripteurs de l'image d'origine (7) ;
> vi. La décision sur l'authenticité d'un objet à valider (113) dans le serveur (112) ;
> vii. La transmission de la décision sur l'authenticité par le serveur (12) à l'équipement informatique (10).

**11.** Procédé mis en oeuvre par ordinateur pour l'intensification du niveau de sécurité contre l'altération et la contrefaçon d'un objet et pour fournir la validation de l'authenticité d'une image présente dans un objet selon l'une quelconque des revendications 1 à 9, **caractérisé par** l'étape de validation de l'authenticité d'au moins une image à valider (4) et d'au moins un marqueur numérique à valider (6) matérialisés dans un objet à valider (2), comprenant les étapes suivantes :

> i. La capture d'au moins une image à valider (106) et de l'image d'un marqueur à valider avec un lecteur optique (11) présent dans un équipement informatique (10) ;
> ii. La transmission d'au moins une image à valider et d'au moins un marqueur numérique à valider à un serveur (110) ;
> iii. La réception d'au moins une image à valider (4) et d'au moins un marqueur numérique à valider (6) par un serveur (12) ;
> iv. Le calcul des descripteurs d'au moins une image à valider (107) exécuté par le serveur (12) ;
> v. Le décodage des descripteurs du marqueur numérique à valider (108) exécuté par le serveur (12) ;
> vi. La recherche dans au moins une base de données pour les descripteurs de l'image d'origine (111) où la base de données avec des informations codées de l'image d'origine (13) est accédée au moyen du serveur (12) ;
> vii. La validation d'une image à valider dans un objet à valider (112) au moyen de la comparaison dans le serveur (12) des descripteurs de l'image à valider (8) avec les descripteurs de l'image d'origine (7) ;
> viii. La décision sur l'authenticité d'un objet à valider (113) dans le serveur (12) ;
> ix. La transmission de la décision sur l'authenticité par le serveur (12) à l'équipement informatique (10).

**12.** Procédé mis en oeuvre par ordinateur pour l'intensification du niveau de sécurité contre l'altération et la contrefaçon d'un objet et pour fournir la validation de l'authenticité d'une image présente dans un objet selon l'une quelconque des revendications 1 à 9, **caractérisé par** l'étape de validation de l'authenticité d'au moins une image à valider (4) et d'au moins un marqueur numérique à valider (6), matérialisés dans un objet à valider (2), comprenant les étapes suivantes :

> i. La capture d'au moins une image à valider (106) avec un lecteur optique (11) présent dans un équipement informatique (10) ;
> ii. Le calcul des descripteurs d'au moins une image à valider (107) exécuté par l'équipement informatique (10) ;
> iii. L'exécution d'une lecture avec le lecteur optique (11) d'au moins une information codée dans au moins un marqueur numérique à valider (6), où l'information codée mentionnée comprend les descripteurs de l'image d'origine (7) ;

iv. La validation d'une image à valider dans un objet à valider (112) au moyen de la comparaison effectuée dans l'équipement informatique (10) des descripteurs de l'image à valider (8) avec les descripteurs de l'image d'origine (7) ;

v. La décision sur l'authenticité d'un objet à valider (113) dans l'équipement informatique (10).

**13.** Procédé de préparation d'un objet d'origine (1) avec un niveau de sécurité intensifié contre l'altération et la contrefaçon, **caractérisé en ce qu'**il comprend les étapes suivantes :

a) Le traitement d'au moins une image d'origine (3), dans lequel au moins une image d'origine (3) est une photographie du visage d'une personne ;

b) L'association d'au moins une information à coder présente dans l'image d'origine (3) à un ou plusieurs motifs d'éléments graphiques pour la représentation de données dans un élément visuel lisible par machine ;

c) La génération d'au moins un marqueur numérique avec des informations codées de l'image d'origine (5), dans laquelle le marqueur numérique (5) comprend au moins un motif d'élément graphique pour la représentation de données obtenu à partir de l'étape b), dans laquelle ledit élément visuel lisible par machine pour la représentation de données est ledit marqueur numérique avec des informations codées de l'image d'origine (5), qui est un marqueur numérique matriciel bidimensionnel ; et dans laquelle les informations codées de l'image d'origine comprennent des descripteurs de l'image d'origine (7) ; dans laquelle les informations à coder présentes dans l'image d'origine (3) comprennent un ou plusieurs descripteurs de l'image d'origine (7) associés aux caractéristiques géométriques d'un ou plusieurs éléments du visage sélectionnés parmi le groupe constitué par le contour du visage, la bouche, le nez, les yeux, les sourcils, les joues et le menton ; dans laquelle les distances entre les descripteurs de l'image d'origine (7) sont utilisées pour la validation de l'authenticité dudit objet d'origine (1), dans laquelle lesdites distances entre les descripteurs de l'image d'origine (7) comprennent des facteurs de pondération associés à une ou plusieurs parmi les relations de distance mentionnées ;

d) La matérialisation d'au moins une image d'origine (3) et d'au moins un marqueur numérique avec des informations codées de l'image d'origine (5) dans un support physique (9) générant un objet d'origine (1).

**14.** Procédé de préparation d'un objet d'origine (1) à niveau de sécurité intensifié contre l'altération et la contrefaçon selon la revendication précédente, **caractérisé en ce que** le support physique (9) est sélectionné parmi une ou plusieurs du groupe constitué par une base cellulosique, une base métallique ou une base en matériau polymère.

**15.** Procédé de préparation d'un objet d'origine (1) à niveau de sécurité intensifié contre l'altération et la contrefaçon selon la revendication précédente, **caractérisé en ce qu'**au moins un marqueur numérique est un UniQode.

**16.** Procédé de préparation d'un objet d'origine (1) à niveau de sécurité intensifié contre l'altération et la contrefaçon selon l'une quelconque des revendications 13 à 15, **caractérisé en ce que** l'étape de matérialisation comprend une ou plusieurs parmi des techniques d'impression, d'estampage, de brûlage, de dépôt et de gravure.

**17.** Objet d'origine (1) à niveau de sécurité intensifié contre l'altération et la contrefaçon, **caractérisé en ce que** l'objet comprend au moins une image d'origine (3) et au moins un marqueur numérique avec des informations codées de l'image d'origine (5) matérialisés dans un support physique (9) à préparer au moyen du procédé défini dans l'une quelconque des revendications 13 à 16 ; dans lequel ledit marqueur numérique avec des informations codées de l'image d'origine (5) est un marqueur numérique à matrice bidimensionnelle et les informations codées de l'image d'origine comprennent des descripteurs de l'image d'origine (7) ; dans lequel au moins une image d'origine (3) est une photographie du visage d'une personne ; dans lequel les informations à coder présentes dans l'image d'origine (3) comprennent un ou plusieurs descripteurs de l'image d'origine (7) associés aux caractéristiques géométriques d'un ou plusieurs éléments du visage sélectionnés parmi le groupe constitué par le contour du visage, la bouche, le nez, les yeux, les sourcils, les joues et le menton.

**18.** Objet d'origine (1) à niveau de sécurité intensifié contre l'altération et la contrefaçon selon la revendication précédente, **caractérisé en ce que** l'objet est sélectionné parmi un timbre, une étiquette, un tag, un timbre officiel, un document, un billet de banque, une carte d'identité, un document d'identité, un document de voyage, un diplôme et un certificat.

**19.** Objet d'origine (1) à niveau de sécurité intensifié contre l'altération et la contrefaçon selon la revendication précédente, **caractérisé en ce qu'**au moins un marqueur numérique avec des informations codées de l'image d'origine (5) est un UniQode.

20. Objet d'origine (1) à niveau de sécurité intensifié contre l'altération et la contrefaçon selon la revendication précédente, **caractérisé en ce que** l'UniQode comprend une ou plusieurs informations codées faisant référence à la traçabilité dans la préparation de l'objet d'origine (1), une ou plusieurs informations codées utilisées dans la validation de l'authenticité d'au moins une image à valider (4) et une ou plusieurs informations codées sur les caractéristiques de l'objet d'origine (1).

21. Objet d'origine (1) à niveau de sécurité intensifié contre l'altération et la contrefaçon selon l'une quelconque des revendications 17 à 20, **caractérisé en ce que** le support physique (9) est sélectionné parmi une ou plusieurs parmi le groupe constitué par une base cellulosique, une base métallique ou une base en matériau polymère.

22. Objet d'origine (1) à niveau de sécurité intensifié contre l'altération et la contrefaçon selon l'une quelconque des revendications 17 à 21, **caractérisé en ce que** l'étape de matérialisation comprend une ou plusieurs parmi les techniques d'impression, d'estampage, de gravure, de dépôt et de gravure.

23. Equipement informatique (10), **caractérisé en ce qu'il** comprend des moyens adaptés pour exécuter les étapes du procédé défini dans l'une quelconque des revendications 1 à 12.

24. . Equipement informatique (10), **caractérisé en ce qu'il** comprend des moyens adaptés pour exécuter les étapes du procédé défini dans l'une quelconque des revendications 13 à 16.

25. Programme informatique, **caractérisé en ce qu'il** comprend des instructions pour faire en sorte que l'équipement informatique (10) tel que défini dans la revendication 23 exécute les étapes du procédé défini dans l'une quelconque des revendications 1 à 12.

26. Programme informatique, **caractérisé en ce qu'**il comprend des instructions pour faire en sorte que l'équipement informatique (10) tel que défini dans la revendication 24 exécute les étapes du procédé défini dans l'une quelconque des revendications 13 à 16.

27. Support de données lisible par ordinateur, **caractérisé en ce qu'**il y est stocké le programme informatique selon la revendication 25.

28. Support de données lisible par ordinateur, **caractérisé en ce qu'**il il y est stocké le programme informatique selon la revendication 26.

[Fig. 1]

[Fig. 2]

[Fig. 3]

[Fig. 4]

[Fig. 5]

[Fig. 6]

[Fig. 7]

[Fig. 8]

[Fig. 9]

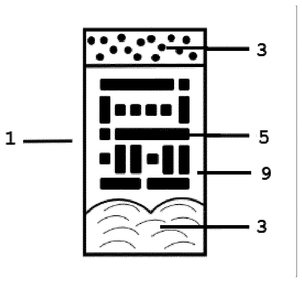

[Fig. 20]

**REFERENCES CITED IN THE DESCRIPTION**

**Patent documents cited in the description**

- US 20040013285 A1, Jordan
- US 6104812 A, Koltai

**Non-patent literature cited in the description**

- Face Description with Local Binary Patterns: Application to Face Recognition. **TIMO AHONEN ; ABDENOUR HADID ; MATTI PIETIKÄINEN.** Pattern Analysis and Machine Intelligence. IEEE, December 2006, vol. 28, 2037-2041
- **NAVNEET DALAL ; BILL TRIGGS.** Histograms of Oriented Gradients for Human Detection. *IEEE Computer Society Conference on Computer Vision and Pattern Recognition,* 25 June 2005, vol. 1, 886-893
- **NAVNEET DALAL.** Finding People in Images and Videos. *PhD Thesis,* 17 July 2006
- **R.M. HARALICK ; K. SHANMUGAM ; I. DINSTEIN.** Textural features for image classification. *IEEE Trans. Syst. Man Cybern.,* 1973, vol. 3 (6), 610-621
- **CRUZ L. ; PATRÃO B. ; GONGALVES, N.** Graphic Code: a New Machine Readable Approach. *IEEE International Conference on Artificial Intelligence and Virtual Reality (AIVR),* 10 December 2018
- **CRUZ L ; PATRÃO B ; GONGALVES, N.** Halftone Pattern: A New Steganographic Approach. *Eurographics 2018, EG 2018 - Short Papers*